# EUROPEAN PATENT APPLICATION

(11) **EP 3 240 351 A1**
(43) Date of publication of application: **01.11.2017**
(21) Application number: 15876663.4
(22) Date of filing: 26.11.2015
(51) Int. Cl.: H04W 74/00

(54) **METHOD AND DEVICE FOR USE IN PROTECTING DATA TRANSMISSION, STATION, AND ACCESS POINT**

(30) Priority: 09.01.2015 WO PCT/CN2015/070485; 21.01.2015 WO PCT/CN2015/071229
(71) Applicant: Huawei Technologies Co., Ltd., Longgang District Shenzhen, Guangdong 518129 (CN)
(72) Inventor: DU, Zhenguo, Shenzhen Guangdong 518129 (CN); LU, Weishan, Shenzhen Guangdong 518129 (CN); YANG, Yunsong, Shenzhen Guangdong 518129 (CN); RONG, Zhigang, Shenzhen Guangdong 518129 (CN)
(74) Representative: Kreuz, Georg Maria
(86) International application number: PCT/CN2015/095714
(87) International publication number: WO 2016/110163

(57) **Abstract**

Embodiments of the present invention provide a data transmission protection method and apparatus. The method includes: receiving, by a station, resource allocation information sent by an access point; obtaining, according to a status of mutual overlap between an allocated transmission channel and multiple subchannels, at least one overlapping subchannel used by the station to send a transmission protection message; and sending the transmission protection message on a current overlapping subchannel according to a status of whether each overlapping subchannel in the at least one overlapping subchannel used by the station to send the transmission protection message is used only by the station to send the transmission protection message, where the transmission protection message is used to protect downlink data transmission from the access point to the station, the transmission protection message includes duration, and the duration is used to indicate an exclusive time of the station for the transmission channel allocated to the station. The present invention can protect data transmission from an access point to a station.

## Description

### TECHNICAL FIELD

The present invention relates to the communications field, and in particular, to a data transmission protection method and apparatus, a station, and an access point.

### BACKGROUND

With the development of communications technologies, a WiFi technology also evolves into a next-generation WiFi HEW (High Efficiency WLAN, High Efficiency WLAN) technology in which a higher system capacity is met and a scenario in which APs (Access Point, access point) and STAs (Station, station) are densely distributed is mainly considered. In a next-generation WiFi HEW scenario, a scheduling-based OFDMA (Orthogonal Frequency Division Multiple Access, orthogonal frequency division multiplexing) data transmission mechanism or MU MIMO (Multi-User Multiple-Input Multiple-Output, multi-user multiple-input multiple-output technology) is used. In an OFDMA system, an AP simultaneously schedules multiple STAs for data transmission on different subchannels. In a MU MIMO system, multiple STAs receive data on a same frequency band. Both the foregoing two systems can effectively improve spectral efficiency and a system throughput.

A basic process of the OFDMA data transmission mechanism includes: an AP sends a trigger (Trigger) frame that includes resource scheduling information of multiple STAs, and the scheduled STAs exchange data with the AP according to the resource scheduling information in the trigger frame within a corresponding time and on a corresponding frequency band. In the WiFi HEW scenario in which APs and STAs are densely distributed, because a large quantity of OBSSs (Overlapping Basic Service Set, overlapping basic service set) exist, mutual interference needs to be avoided between data transmission in a data transmission process, so as to ensure transmission reliability.

A conventional data transmission protection method is an RTS/CTS (Request to Send/Clear to Send, request to send/clear to send) mechanism. A specific process includes: a data sending party sends, to a data receiving party, an RTS frame that carries duration obtained by means of calculation by the data sending party according to a known data transmission quantity. After correctly receiving the RTS frame, the data receiving party returns, to the data sending party, a CTS frame that carries duration. The duration carried in the CTS frame is a value obtained after a time length occupied for CTS frame sending and two SIFSs (Short Inte-frame Space, short interframe space) are subtracted from the duration carried in the RTS frame. Because of a radio channel broadcast characteristic, the CTS frame may be received by other WiFi devices. These WiFi devices set NAVs (Network Allocation Vector, network allocation vector) of the WiFi devices, that is, set backoff timers, according to the duration carried in the CTS frame. Before the NAV is reduced to 0, the WiFi device does not actively initiate data transmission, thereby avoiding causing interference to on-going data transmission. Apparently, the duration carried in the CTS frame is equivalent to reservation of a period of exclusive time for data transmission, and is used to protect subsequent data transmission. Therefore, the duration carried in the CTS frame may be referred to as data transmission protection information, that is, a transmission protection message.

In the WiFi HEW, because the OFDMA mechanism is introduced, a sending channel and a receiving channel of a STA are completely determined by an AP, and data transmission protection becomes relatively complex.

For downlink transmission from the AP to the STA, the STA does not know in advance a channel on which the AP sends data to the STA; therefore, the STA cannot protect in advance data transmission from the AP to the STA in a manner similar to a CTS frame sending manner.

In another aspect, in a protocol supported by a legacy device (Legacy Device), a transmission channel is fixedly divided into multiple subchannels, and a bandwidth of each subchannel is 20 MHZ. In the protocol supported by the legacy device, a bandwidth occupied by a CTS frame is 20 MHZ. That is, if a transmission channel is fixedly divided into N subchannels, only a maximum of N CTS frames can be transmitted on the transmission channel at a same moment. In the OFDMA system, in order that resources are scheduled more effectively, a width of a smallest divided frequency band may be smaller than that of a subchannel of a conventional device. Consequently, the legacy device cannot correctly receive a HEW frame.

In the MU MIMO system, a similar problem also exists. It may be learned that in the data transmission protection method in the prior art, it is difficult to protect data transmission from an AP to a STA while maintaining compatibility with the protocol supported by the legacy device.

### SUMMARY

To resolve a problem of lack of protection for data transmission between an access point and a station, embodiments of the present invention provide a data transmission protection method and apparatus.

According to a first aspect, an embodiment of the present invention provides a data transmission protection method, and the method includes:
receiving, by a station, resource allocation information sent by an access point, where the resource allocation information includes a transmission channel allocated by the access point to at least two stations that include the station;
obtaining, by the station according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station;
determining whether each overlapping subchannel in the at least one overlapping subchannel used by the station to send the transmission protection message is used only by the station to send the transmission protection message; and
sending, by the station, the transmission protection message on a current overlapping subchannel if the current overlapping subchannel is used only by the station to send the transmission protection message; or
sending, by the station, the transmission protection message on a current overlapping subchannel according to a preset rule if the current overlapping subchannel is further used by another station to send the transmission protection message, where
if the current overlapping subchannel is further used by another station to send the transmission protection message, multiple stations that send transmission protection messages on the current overlapping subchannel sequentially send the transmission protection messages on the current overlapping subchannel, where the multiple stations include the station; and
the transmission protection message is used to protect downlink data transmission from the access point to the station, the transmission protection message includes duration, and the duration is used to indicate an exclusive time of the station for the transmission channel allocated to the station.

In a first possible implementation manner of the first aspect, bandwidths of the multiple subchannels are equal.

With reference to the first aspect or the first possible implementation manner of the first aspect, in a second possible implementation manner, the transmission protection message is a clear to send CTS frame or an ACK frame.

With reference to any one of the first aspect or the first to the second possible implementation manners of the first aspect, in a third possible implementation manner, the sending, by the station, the transmission protection message on a current overlapping subchannel if the current overlapping subchannel is used only by the station to send the transmission protection message includes:
sending, by the station, the transmission protection message on the current overlapping subchannel when a preset time length elapses after the station receives the resource allocation information; or
the sending, by the station, the transmission protection message on a current overlapping subchannel according to a preset rule if the current overlapping subchannel is further used by another station to send the transmission protection message includes:
   sending, by the station, the transmission protection message on the current overlapping subchannel according to the preset rule when a preset time length elapses after the station receives the resource allocation information.

With reference to any one of the first aspect or the first to the second possible implementation manners of the first aspect, in a fourth possible implementation manner, the sending, by the station, the transmission protection message on a current overlapping subchannel if the current overlapping subchannel is used only by the station to send the transmission protection message includes:
sending, by the station, the transmission protection message on the current overlapping subchannel when a preset time length elapses after the station completes sending of uplink data to the access point; or
the sending, by the station, the transmission protection message on a current overlapping subchannel according to a preset rule if the current overlapping subchannel is further used by another station to send the transmission protection message includes:
   sending, by the station, the transmission protection message on the current overlapping subchannel according to the preset rule when a preset time length elapses after the station completes sending of uplink data to the access point.

With reference to either of the third possible implementation manner and the fourth possible implementation manner of the first aspect, in a fifth possible implementation manner, the sending, by the station, the transmission protection message on a current overlapping subchannel according to a preset rule includes:
obtaining, by the station according to the resource allocation information, the multiple stations that send the transmission protection messages on the current overlapping subchannel;
sorting, by the station, the multiple stations according to a sorting rule, where the sorting is used to determine an order of sending, by the multiple stations, the transmission protection messages on the current overlapping subchannel, and the multiple stations include the station;
obtaining, by the station according to the sorting, the order of sending an transmission protection message by the station;
obtaining, by the station, a corresponding first sending moment according to the order of sending the transmission protection message; and
sending, by the station, the transmission protection message on the current overlapping subchannel at the first sending moment, where
the sorting rule is a preset sorting rule, or a sorting rule indicated in the resource allocation information.

With reference to the fifth possible implementation manner of the first aspect, in a sixth possible implementation manner, the preset sorting rule includes:
sorting in descending order of station IDs;
sorting in ascending order of station IDs; or
sorting according to an order of stations in the resource allocation information.

With reference to either of the third possible implementation manner and the fourth possible implementation manner of the first aspect, in a seventh possible implementation manner, the sending the transmission protection message on a current overlapping subchannel according to a preset rule includes:
obtaining a second sending moment according to a transmission protection message sending order or a second sending moment indication information designated in the resource allocation information; and
sending the transmission protection message on the current overlapping subchannel at the second sending moment, where
the second sending moment is a moment used for sending the transmission protection message, and each station that sends the transmission protection message on the current overlapping subchannel is corresponding to one second sending moment.

With reference to any one of the first aspect or the first to the seventh possible implementation manners of the first aspect, in an eighth possible implementation manner, after the station receives the resource allocation information sent by the access point, and before the at least one overlapping subchannel used by the station to send the transmission protection message is obtained, the method further includes:
obtaining, by the station, transmission protection indication information from the resource allocation information, where the transmission protection indication information indicates whether the station is to send the transmission protection message or indicates whether the station is allowed to send the transmission protection message; and
when the transmission protection indication information indicates that the station is to send the transmission protection message or indicates that the station is allowed to send the transmission protection message, obtaining the at least one overlapping subchannel used by the station to send the transmission protection message.

According to a second aspect, an embodiment of the present invention provides a data transmission protection method, and the method includes:
receiving, by a station, resource allocation information sent by an access point, where the resource allocation information includes a transmission channel allocated by the access point to at least two stations that include the station;
obtaining, by the station according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel of the station; and
sending the transmission protection message on the at least one overlapping subchannel, where
if a current overlapping subchannel on which the station sends the transmission protection message is further used by another station to send the transmission protection message, multiple stations that send transmission protection messages on the current overlapping subchannel simultaneously send the transmission protection messages on the current overlapping subchannel, where the multiple stations include the station;
the simultaneously sent transmission protection messages are the same; and
the transmission protection message is used to protect downlink data transmission from the access point to the station, the transmission protection message includes duration, and the duration is used to indicate an exclusive time of the station for the transmission channel allocated to the station.

In a first possible implementation manner of the second aspect, bandwidths of the multiple subchannels are equal.

With reference to the second aspect or the first possible implementation manner of the second aspect, in a second possible implementation manner, the transmission protection message is a clear to send CTS frame or an ACK frame.

With reference to any one of the second aspect or the first to the second possible implementation manners of the second aspect, in a third possible implementation manner, the sending the transmission protection message on the at least one overlapping subchannel includes:
sending the transmission protection message when a preset time length elapses after the resource allocation information is received; or
sending the transmission protection message when a preset time length elapses after sending of uplink data to the access point is completed.

With reference to any one of the second aspect or the first to the second possible implementation manners of the second aspect, in a fourth possible implementation manner, the sending the transmission protection message on the at least one overlapping subchannel includes:
after the resource allocation information is received, sending, according to a third sending moment designated in the resource allocation information, the transmission protection message at the third sending moment; or
after sending of uplink data to the access point is completed, sending, according to a third sending moment designated in the resource allocation information, the transmission protection message at the third sending moment, where
the third sending moment is a moment that is allocated by the access point to the station and that is used by the station to send the transmission protection message.

With reference to any one of the second aspect or the first to the fourth possible implementation manners of the second aspect, in a fifth possible implementation manner, that the simultaneously sent transmission protection messages are the same includes:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

With reference to any one of the second aspect or the first to the fifth possible implementation manners of the second aspect, in a sixth possible implementation manner, after the station receives the resource allocation information sent by the access point, and before the at least one overlapping subchannel used by the station to send the transmission protection message is obtained, the method further includes:
obtaining, by the station, transmission protection indication information from the resource allocation information, where the transmission protection indication information indicates whether the station is to send the transmission protection message or indicates whether the station is allowed to send the transmission protection message; and
when the transmission protection indication information indicates that the station is to send the transmission protection message or indicates that the station is allowed to send the transmission protection message, obtaining the at least one overlapping subchannel used by the station to send the transmission protection message.

According to a third aspect, an embodiment of the present invention provides a data transmission protection method, and the method includes:
sending, by an access point, resource allocation information, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel; and
if at least two stations send transmission protection messages on the current overlapping subchannel, sequentially sending, by the at least two stations, the transmission protection messages, where
an operating band between the access point and the station is divided into multiple subchannels, and the overlapping subchannel is a subchannel that overlaps the transmission channel allocated to the station; and
the transmission protection message is used to protect downlink data from the access point to the station that sends the transmission protection message, the transmission protection message includes duration, and the duration is used to indicate an exclusive time, of the station that sends the transmission protection message, for the transmission channel allocated to the station.

In a first possible implementation manner of the third aspect, bandwidths of the multiple subchannels are equal.

With reference to the third aspect or the first possible implementation manner of the third aspect, in a second possible implementation manner, the transmission protection message is a clear to send CTS frame or an ACK frame.

With reference to any one of the third aspect or the first to the second possible implementation manners of the third aspect, in a third possible implementation manner, after sending of the resource allocation information is completed, if within a first time length, the access point receives the transmission protection message sent by the station or detects that the operating band is busy, the access point sends the downlink data to the station when a second time length elapses after sending of the resource allocation information ends; or
after sending of the resource allocation information is completed, if within a first time length, it is detected that the operating band is idle, the access point sends the downlink data to the station when a third time length elapses after sending of the resource allocation information ends.

With reference to any one of the third aspect or the first to the second possible implementation manners of the third aspect, in a fourth possible implementation manner, after the access point completes sending of the resource allocation information, the method further includes:
receiving, by the access point, uplink data sent by the station; and
after the access point completes receiving of the uplink data, if within a first time length, the transmission protection message sent by the station is received or it is detected that the operating band is busy, transmitting, by the access point, the downlink data when a second time length elapses after receiving of the uplink data ends; or
after the access point completes receiving of the uplink data sent by the station, if within a first time length, it is detected that the operating band is idle, transmitting, by the access point, the downlink data when a third time length elapses after the foregoing data receiving ends.

According to a fourth aspect, an embodiment of the present invention provides a data transmission protection method, and the method includes:
sending, by an access point, resource allocation information, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel; and
if at least two stations send transmission protection messages on the current overlapping subchannel, simultaneously sending, by the at least two stations, the transmission protection messages, where the simultaneously sent the transmission protection messages are the same, where
an operating band between the access point and the station is divided into multiple subchannels, and the overlapping subchannel is a subchannel that overlaps the transmission channel allocated to the station; and
the transmission protection message is used to protect downlink data from the access point to the station, the transmission protection message includes duration, and the duration is used to indicate an exclusive time of the station for the transmission channel allocated to the station.

In a first possible implementation manner of the fourth aspect, bandwidths of the multiple subchannels are equal.

With reference to the fourth aspect or the first possible implementation manner of the fourth aspect, in a second possible implementation manner, the transmission protection message is a clear to send CTS frame or an ACK frame.

With reference to any one of the fourth aspect or the first to the second possible implementation manners of the fourth aspect, in a third possible implementation manner, after sending of the resource allocation information is completed, if within a first time length, the access point receives the transmission protection message sent by the station or detects that the operating band is busy, the access point sends the downlink data to the station when a second time length elapses after sending of the resource allocation information ends; or
after sending of the resource allocation information is completed, if within a first time length, it is detected that the operating band is idle, the access point sends the downlink data to the station when a third time length elapses after sending of the resource allocation information ends.

With reference to any one of the fourth aspect or the first to the second possible implementation manners of the fourth aspect, in a fourth possible implementation manner, after the access point completes sending of the resource allocation information, the method further includes:
receiving, by the access point, uplink data sent by the station; and
after the station completes receiving of the uplink data, if within a first time length, the transmission protection message sent by the station is received or it is detected that the operating band is busy, transmitting, by the station, the downlink data when a second time length elapses after receiving of the uplink data ends; or
after the access point completes receiving of the uplink data sent by the station, if within a first time length, it is detected that the operating band is idle, transmitting, by the access point, the downlink data when a third time length elapses after the foregoing data receiving ends.

With reference to either of the third possible implementation manner and the fourth possible implementation manner of the fourth aspect, in a fifth possible implementation manner, the first time length is a time length of a point coordination function interframe space, the second time length is a sum of a time length of two short interframe spaces and a transmission time length of one transmission protection message, and the third time length is a time length of a point coordination function interframe space, where
the time length of the point coordination function interframe space is greater than the time length of the short interframe space.

With reference to any one of the fourth aspect or the first possible implementation manner to the fifth possible implementation manner of the fourth aspect, in a sixth possible implementation manner, that the simultaneously sent transmission protection messages are the same includes:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

According to a fifth aspect, an embodiment of the present invention provides a data transmission protection apparatus that is disposed at a station, and the apparatus includes:
a first receiving unit, where the resource allocation information includes a transmission channel allocated by the access point to at least two stations that include the station; and a first overlapping subchannel obtaining unit, configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station;
a first determining unit, configured to determine whether each overlapping subchannel in the at least one overlapping subchannel used by the station to send the transmission protection message is used only by the station to send the transmission protection message;
a first sending unit, configured to: if a current overlapping subchannel is used only by the station to send the transmission protection message, send the transmission protection message on the current overlapping subchannel; and
a second sending unit, configured to: if the current overlapping subchannel is further used by another station to send the transmission protection message, send the transmission protection message on the current overlapping subchannel according to a preset rule, where
if the current overlapping subchannel is further used by another station to send the transmission protection message, multiple stations that send transmission protection messages on the current overlapping subchannel sequentially send the transmission protection messages on the current overlapping subchannel, where the multiple stations include the station; and
the transmission protection message is used to protect downlink data transmission from the access point to the station, the transmission protection message includes duration, and the duration is used to indicate an exclusive time of the station for the transmission channel allocated to the station.

In a first possible implementation manner of the fifth aspect, bandwidths of the multiple subchannels are equal.

With reference to the fifth aspect or the first possible implementation manner of the fifth aspect, in a second possible implementation manner, the transmission protection message is a clear to send CTS frame or an ACK frame.

With reference to any one of the fifth aspect or the first to the second possible implementation manners of the fifth aspect, in a third possible implementation manner, the first sending unit is specifically configured to:
if the current overlapping subchannel is used only by the station to send the transmission protection message, send the transmission protection message on the current overlapping subchannel when a preset time length elapses after the resource allocation information is received; or
the second sending unit is specifically configured to:
   if the current overlapping subchannel is further used by another station to send the transmission protection message, send the transmission protection message on the current overlapping subchannel according to the preset rule when a preset time length elapses after the resource allocation information is received.

With reference to any one of the fifth aspect or the first to the second possible implementation manners of the fifth aspect, in a fourth possible implementation manner, the first sending unit is specifically configured to:
if the current overlapping subchannel is used only by the station to send the transmission protection message, send the transmission protection message on the current overlapping subchannel when a preset time length elapses after sending of uplink data to the access point is completed; or
the second sending unit is specifically configured to:
   if the current overlapping subchannel is further used by another station to send the transmission protection message, send the transmission protection message on the current overlapping subchannel according to the preset rule when a preset time length elapses after sending of uplink data to the access point is completed.

With reference to either of the third possible implementation manner and the fourth possible implementation manner of the fifth aspect, in a fifth possible implementation manner, the second sending unit includes:
a station obtaining subunit, configured to obtain, according to the resource allocation information, the multiple stations that send the transmission protection messages on the current overlapping subchannel;
a sorting subunit, configured to sort the multiple stations according to a sorting rule, where the sorting is used to determine an order of sending, by the multiple stations, the transmission protection messages on the current overlapping subchannel, and the multiple stations include the station;
an order obtaining subunit, configured to obtain, according to the sorting, the order of sending an transmission protection message by the station;
a first sending moment obtaining subunit, configured to obtain a corresponding first sending moment according to the order of sending the transmission protection message; and
a first sending subunit, configured to send the transmission protection message on the current overlapping subchannel at the first sending moment, where
the sorting rule is a preset sorting rule, or a sorting rule indicated in the resource allocation information.

With reference to the fifth possible implementation manner of the fifth aspect, in a sixth possible implementation manner, the preset sorting rule includes:
sorting in descending order of station IDs;
sorting in ascending order of station IDs; or
sorting according to an order of stations in the resource allocation information.

With reference to either of the third possible implementation manner and the fourth possible implementation manner of the fifth aspect, in a seventh possible implementation manner, the second sending unit includes:
a second sending moment obtaining subunit, configured to obtain a second sending moment according to a transmission protection message sending order or a second sending moment indication information designated in the resource allocation information; and
a second sending subunit, configured to send the transmission protection message on the current overlapping subchannel at the second sending moment, where
the second sending moment is a moment used for sending the transmission protection message, and each station that sends the transmission protection message on the current overlapping subchannel is corresponding to one second sending moment.

With reference to any one of the fifth aspect or the first to the seventh possible implementation manners of the fifth aspect, in an eighth possible implementation manner, the apparatus further includes a first transmission protection indication information obtaining unit, configured to obtain transmission protection indication information from the resource allocation information, where the transmission protection indication information indicates whether the station is to send the transmission protection message or indicates whether the station is allowed to send the transmission protection message; and
the first overlapping subchannel obtaining unit is specifically configured to: when the transmission protection indication information indicates that the station is to send the transmission protection message or indicates that the station is allowed to send the transmission protection message, obtain, according to the status of mutual overlap between the allocated transmission channel and the multiple subchannels, the at least one overlapping subchannel used by the station to send the transmission protection message.

According to a sixth aspect, an embodiment of the present invention provides a data transmission protection apparatus that is disposed at a station, and the apparatus includes:
a second receiving unit, where the resource allocation information includes a transmission channel allocated by the access point to at least two stations that include the station;
a second overlapping subchannel obtaining unit, configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station; and
a third sending unit, configured to send the transmission protection message on the at least one overlapping subchannel, where
if a current overlapping subchannel on which the station sends the transmission protection message is further used by another station to send the transmission protection message, multiple stations that send transmission protection messages on the current overlapping subchannel simultaneously send the transmission protection messages on the current overlapping subchannel, where the multiple stations include the station;
the simultaneously sent transmission protection messages are the same; and
the transmission protection message is used to protect downlink data transmission from the access point to the station, the transmission protection message includes duration, and the duration is used to indicate an exclusive time of the station for the transmission channel allocated to the station.

In a first possible implementation manner of the sixth aspect, bandwidths of the multiple subchannels are equal.

With reference to the sixth aspect or the first possible implementation manner of the sixth aspect, in a second possible implementation manner, the transmission protection message is a clear to send CTS frame or an ACK frame.

With reference to any one of the sixth aspect or the first to the second possible implementation manners of the sixth aspect, in a third possible implementation manner, the third sending unit is specifically configured to send the transmission protection message on the at least one overlapping subchannel when a preset time length elapses after the resource allocation information is received; or
the third sending unit is specifically configured to send the transmission protection message on the at least one overlapping subchannel when a preset time length elapses after sending of uplink data transmission to the access point is completed.

With reference to any one of the sixth aspect or the first to the second possible implementation manners of the sixth aspect, in a fourth possible implementation manner, the third sending unit is specifically configured to: after the resource allocation information is received, send, according to a third sending moment designated in the resource allocation information, the transmission protection message at the third sending moment; or
the third sending unit is specifically configured to: after sending of uplink data to the access point is completed, send, according to a third sending moment designated in the resource allocation information, the transmission protection message at the third sending moment, where
the third sending moment is a moment that is allocated by the access point to the station and that is used by the station to send the transmission protection message.

With reference to any one of the sixth aspect or the first to the second possible implementation manners of the sixth aspect, in a fifth possible implementation manner, that the simultaneously sent transmission protection messages are the same includes:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

With reference to any one of the sixth aspect or the first to the fifth possible implementation manners of the sixth aspect, in a sixth possible implementation manner, the apparatus further includes a second transmission protection indication information obtaining unit, configured to obtain transmission protection indication information from the resource allocation information, where the transmission protection indication information indicates whether the station is to send the transmission protection message or indicates whether the station is allowed to send and transmit the transmission protection message; and
the second overlapping subchannel obtaining unit is specifically configured to: when the transmission protection indication information indicates that the station is to send the transmission protection message or indicates that the station is allowed to send the transmission protection message, obtain, according to the status of mutual overlap between the allocated transmission channel and the multiple subchannels, the at least one overlapping subchannel used by the station to send the transmission protection message.

According to a seventh aspect, an embodiment of the present invention provides a data transmission protection apparatus that is disposed at an access point, and the apparatus includes:
a first resource allocation information sending unit, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel, where
if at least two stations send transmission protection messages on the current overlapping subchannel, the at least two stations sequentially send the transmission protection messages;
an operating band between the access point and the station is divided into multiple subchannels, and the overlapping subchannel is a subchannel that overlaps the transmission channel allocated to the station; and
the transmission protection message is used to protect downlink data from the access point to the station that sends the transmission protection message, the transmission protection message includes duration, and the duration is used to indicate an exclusive time, of the station that sends the transmission protection message, for the transmission channel allocated to the station.

In a first possible implementation manner of the seventh aspect, bandwidths of the multiple subchannels are equal.

With reference to the seventh aspect or the first possible implementation manner of the seventh aspect, in a second possible implementation manner, the transmission protection message is a clear to send CTS frame or an ACK frame.

With reference to any one of the seventh aspect or the first to the second possible implementation manners of the seventh aspect, in a third possible implementation manner, the apparatus further includes a first downlink data sending unit, configured to: after the first resource allocation information sending unit completes sending of the resource allocation information, if within a first time length, the access point receives the transmission protection message sent by the station or detects that the operating band is busy, send the downlink data to the station when a second time length elapses after sending of the resource allocation information ends; or
the first downlink data sending unit is further configured to: after the first resource allocation information sending unit completes sending of the resource allocation information, if within a first time length, it is detected that the operating band is idle, send the downlink data to the station when a third time length elapses after sending of the resource allocation information ends.

With reference to any one of the seventh aspect or the first to the second possible implementation manners of the seventh aspect, in a fourth possible implementation manner, the apparatus further includes a second downlink data sending unit, configured to: after the access point completes sending of the resource allocation information, receive uplink data sent by the station; and after receiving of the uplink data is completed, if within a first time length, the transmission protection message sent by the station is received or it is detected that the operating band is busy, transmit the downlink data when a second time length elapses after receiving of the uplink data ends; or
the second downlink data sending unit is further configured to: after receiving of the uplink data sent by the station is completed, if within a first time length, it is detected that the operating band is idle, transmit the downlink data when a third time length elapses after the foregoing data receiving ends.

According to an eighth aspect, an embodiment of the present invention provides a data transmission protection apparatus that is disposed at an access point, and the apparatus includes:
a second resource allocation information sending unit, configured to send resource allocation information, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel, where
if at least two stations send transmission protection messages on the current overlapping subchannel, the at least two stations simultaneously send the transmission protection messages, where the simultaneously sent the transmission protection messages are the same;
an operating band between the access point and the station is divided into multiple subchannels, and the overlapping subchannel is a subchannel that overlaps the transmission channel allocated to the station; and
the transmission protection message is used to protect downlink data from the access point to the station, the transmission protection message includes duration, and the duration is used to indicate an exclusive time of the station for the transmission channel allocated to the station.

In a first possible implementation manner of the eighth aspect, bandwidths of the multiple subchannels are equal.

With reference to the eighth aspect or the first possible implementation manner of the eighth aspect, in a second possible implementation manner, the transmission protection message is a clear to send CTS frame or an ACK frame.

With reference to any one of the eighth aspect or the first to the second possible implementation manners of the eighth aspect, in a third possible implementation manner, the apparatus further includes a third downlink data sending unit, configured to: after the second resource allocation information sending unit completes sending of the resource allocation information, if within a first time length, the access point receives the transmission protection message sent by the station or detects that the operating band is busy, send, by the access point, the downlink data to the station when a second time length elapses after sending of the resource allocation information ends; or
the third downlink data sending unit is further configured to: after sending of the resource allocation information is completed, if within a first time length, it is detected that the operating band is idle, send, by the access point, the downlink data to the station when a third time length elapses after sending of the resource allocation information ends.

With reference to any one of the eighth aspect or the first to the second possible implementation manners of the eighth aspect, in a fourth possible implementation manner, the apparatus further includes a fourth downlink data sending unit, configured to: after the second resource allocation information sending unit completes sending of the resource allocation information, receive uplink data sent by the station; and
the fourth downlink data sending unit is further configured to: after receiving of the uplink data is completed, if within a first time length, the transmission protection message sent by the station is received or it is detected that the operating band is busy, transmit the downlink data when a second time length elapses after receiving of the uplink data ends; or
the fourth downlink data sending unit is further configured to: after receiving of the uplink data sent by the station is completed, if within a first time length, it is detected that the operating band is idle, transmit the downlink data when a third time length elapses after the foregoing data receiving ends.

According to a ninth aspect, an embodiment of the present invention provides a station, including:
a receiver, configured to receive resource allocation information sent by an access point, where the resource allocation information includes a transmission channel allocated by the access point to at least two stations that include the station;
a processor, configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station, where
the processor is further configured to determine whether each overlapping subchannel in the at least one overlapping subchannel used by the station to send the transmission protection message is used only by the station to send the transmission protection message; and
a transmitter, configured to: if a current overlapping subchannel is used only by the station to send the transmission protection message, send the transmission protection message on the current overlapping subchannel; and
the transmitter is further configured to: if the current overlapping subchannel is further used by another station to send the transmission protection message, send the transmission protection message on the current overlapping subchannel according to a preset rule, where
if the current overlapping subchannel is further used by another station to send the transmission protection message, multiple stations that send transmission protection messages on the current overlapping subchannel sequentially send the transmission protection messages on the current overlapping subchannel, where the multiple stations include the station; and
the transmission protection message is used to protect downlink data transmission from the access point to the station, the transmission protection message includes duration, and the duration is used to indicate an exclusive time of the station for the transmission channel allocated to the station.

In a first possible implementation manner of the ninth aspect, the transmitter is specifically configured to:
if the current overlapping subchannel is used only by the station to send the transmission protection message, send the transmission protection message on the current overlapping subchannel when a preset time length elapses after the resource allocation information is received; or
the transmitter is specifically configured to: if the current overlapping subchannel is further used by another station to send the transmission protection message, send the transmission protection message on the current overlapping subchannel according to the preset rule when a preset time length elapses after the resource allocation information is received.

With reference to the ninth aspect, in a second possible implementation manner, the transmitter is specifically configured to: if the current overlapping subchannel is used only by the station to send the transmission protection message, send the transmission protection message on the current overlapping subchannel when a preset time length elapses after sending of uplink data to the access point is completed; or
the transmitter is specifically configured to: if the current overlapping subchannel is further used by another station to send the transmission protection message, send the transmission protection message on the current overlapping subchannel according to the preset rule when a preset time length elapses after sending of uplink data to the access point is completed.

According to a tenth aspect, an embodiment of the present invention provides a station, and the station includes:
a receiver, configured to receive resource allocation information sent by an access point, where the resource allocation information includes a transmission channel allocated by the access point to at least two stations that include the station;
a processor, configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station; and
a transmitter, configured to send the transmission protection message on the at least one overlapping subchannel, where
if a current overlapping subchannel on which the station sends the transmission protection message is further used by another station to send the transmission protection message, multiple stations that send transmission protection messages on the current overlapping subchannel simultaneously send the transmission protection messages on the current overlapping subchannel, where the multiple stations include the station;
the simultaneously sent transmission protection messages are the same; and
the transmission protection message is used to protect downlink data transmission from the access point to the station, the transmission protection message includes duration, and the duration is used to indicate an exclusive time of the station for the transmission channel allocated to the station.

According to an eleventh aspect, an embodiment of the present invention provides an access point, and the access point includes:
a processor, configured to generate resource allocation information;
a transmitter, configured to send the resource allocation information, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel; and
a receiver, configured to: if at least two stations send transmission protection messages on the current overlapping subchannel, receive the transmission protection messages sequentially sent by the at least two stations, where
an operating band between the access point and the station is divided into multiple subchannels, and the overlapping subchannel is a subchannel that overlaps the transmission channel allocated to the station; and
the transmission protection message is used to protect downlink data from the access point to the station that sends the transmission protection message, the transmission protection message includes duration, and the duration is used to indicate an exclusive time, of the station that sends the transmission protection message, for the transmission channel allocated to the station.

In a first possible implementation manner of the eleventh aspect, the transmitter is further configured to: after sending of the resource allocation information is completed, if within a first time length, the access point receives the transmission protection message sent by the station or detects that the operating band is busy, send the downlink data to the station when a second time length elapses after sending of the resource allocation information ends; or
the transmitter is further configured to: after sending of the resource allocation information is completed, if within a first time length, it is detected that the operating band is idle, send the downlink data to the station when a third time length elapses after sending of the resource allocation information ends.

With reference to the eleventh aspect, in a second possible implementation manner of the eleventh aspect, the receiver is further configured to: after sending of the resource allocation information is completed, receive uplink data sent by the station; and
the transmitter is further configured to: after receiving of the uplink data is completed, if within a first time length, the transmission protection message sent by the station is received or it is detected that the operating band is busy, transmit the downlink data when a second time length elapses after receiving of the uplink data ends; or
the transmitter is further configured to: after receiving of the uplink data sent by the station is completed, if within a first time length, it is detected that the operating band is idle, transmit the downlink data when a third time length elapses after the foregoing data receiving ends.

According to a twelfth aspect, an embodiment of the present invention provides an access point, and the access point includes:
a processor, configured to generate resource allocation information;
a transmitter, configured to send the resource allocation information, where the resource allocation information includes a transmission channel allocated by the access point to at least two stations that include the station, so that the station that receives the resource allocation information obtains, according to the resource allocation information, at least one overlapping subchannel used by the station to send a transmission protection message, and sends the transmission protection message on each overlapping subchannel in the at least one overlapping subchannel; and
a receiver, configured to: if at least two stations send transmission protection messages on the current overlapping subchannel, receive the transmission protection messages simultaneously sent by the at least two stations, where the simultaneously sent transmission protection messages are the same, where
an operating band between the access point and the station is divided into multiple subchannels, and the overlapping subchannel is a subchannel that overlaps the transmission channel allocated to the station; and
the transmission protection message is used to protect downlink data from the access point to the station, the transmission protection message includes duration, and the duration is used to indicate an exclusive time of the station for the transmission channel allocated to the station.

In a first possible implementation manner of the twelfth aspect, the transmitter is further configured to: after sending of the resource allocation information is completed, if within a first time length, the access point receives the transmission protection message sent by the station or detects that the operating band is busy, send the downlink data to the station when a second time length elapses after sending of the resource allocation information ends; or
the transmitter is further configured to: after sending of the resource allocation information is completed, if within a first time length, it is detected that the operating band is idle, send the downlink data to the station when a third time length elapses after sending of the resource allocation information ends.

With reference to the twelfth aspect, in a second possible implementation manner of the twelfth aspect, the receiver is further configured to: after sending of the resource allocation information is completed, receive uplink data sent by the station; and
the transmitter is further configured to: after receiving of the uplink data is completed, if within a first time length, the transmission protection message sent by the station is received or it is detected that the operating band is busy, transmit the downlink data when a second time length elapses after receiving of the uplink data ends; or
the transmitter is further configured to: after receiving of the uplink data sent by the station is completed, if within a first time length, it is detected that the operating band is idle, transmit the downlink data when a third time length elapses after the foregoing data receiving ends.

The embodiments of the present invention provide a data transmission protection method and apparatus. A station receives resource allocation information sent by an access point, where the resource allocation information includes a transmission channel allocated by the access point to the station; the station obtains, according to a status of mutual overlap between the allocated transmission channel and multiple subchannels, at least one overlapping subchannel used by the station to send a transmission protection message, and sends the transmission protection message on the at least one overlapping subchannel, where the transmission protection message includes duration, and the duration indicates an exclusive time of the station for the transmission channel allocated to the station, so that data transmission from the access point to the station is protected, and another third-party station sets duration of the another third-party station according to the duration in the transmission protection message. Therefore, a time and a frequency band for data transmission that needs to be performed from the AP to the STA are shunned, further, data transmission sent from the AP to the STA is protected, and data transmission reliability is improved.

### BRIEF DESCRIPTION OF DRAWINGS

To describe the technical solutions in the embodiments of the present invention or in the prior art more clearly, the following briefly describes the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a data transmission protection method according to an embodiment of the present invention;
FIG. 2 is a schematic diagram of data transmission on a transmission channel according to an embodiment of the present invention;
FIG. 3 is a schematic diagram of overlap between a transmission channel and a subchannel according to an embodiment of the present invention;
FIG. 4 (a) and FIG. 4 (b) are schematic diagrams of sending a CTS frame by a STA according to an embodiment of the present invention;
FIG. 5 is a schematic diagram of sending a transmission protection message by a STA according to an embodiment of the present invention;
FIG. 6 is a schematic diagram of sending a transmission protection message by a STA according to an embodiment of the present invention;
FIG. 7 is a schematic diagram of sending a transmission protection message by a STA according to an embodiment of the present invention;
FIG. 8 is a schematic diagram of sending a transmission protection message by a STA according to an embodiment of the present invention;
FIG. 9 is a schematic diagram of sending a transmission protection message by a STA according to an embodiment of the present invention;
FIG. 10 is a schematic diagram of sending a transmission protection message by a STA according to an embodiment of the present invention;
FIG. 11 is a schematic diagram of sending a transmission protection message by a STA according to an embodiment of the present invention;
FIG. 12 is a schematic diagram of sending a transmission protection message by a STA according to an embodiment of the present invention;
FIG. 13 is a schematic diagram of sending a transmission protection message by a STA according to an embodiment of the present invention;
FIG. 14 is a schematic diagram of a STA according to an embodiment of the present invention;
FIG. 15 is a schematic diagram of an AP according to an embodiment of the present invention; and
FIG. 16 is a flowchart of a data transmission protection method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by persons of ordinary skill in the art based on the embodiments of the present invention without creative efforts shall fall within the protection scope of the present invention.

To comprehensively understand the present invention, many specific details are mentioned in the following detailed descriptions; however, persons skilled in the art should understand that the present invention may be implemented without theses specific details. In other embodiments, detailed descriptions of well-known methods, processes, components, and circuits are not described in detail, so that the embodiments are described without being unnecessarily blurred.

The embodiments of the present invention provide a data transmission protection method and apparatus, and can protect downlink data transmission from an AP to a STA.

### Embodiment 1

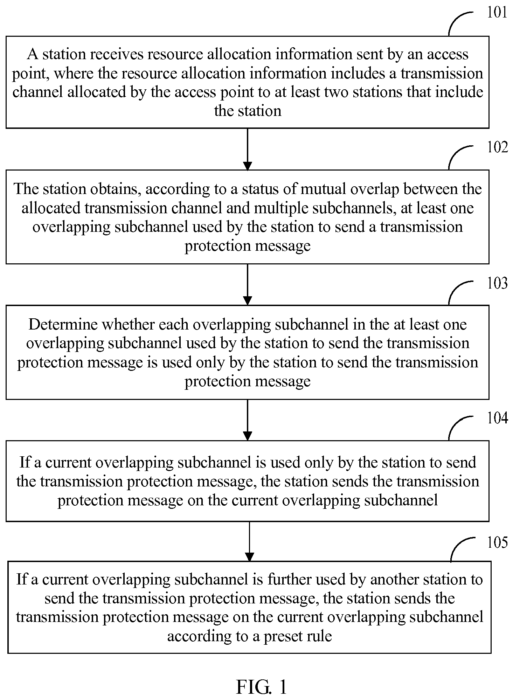

FIG. 1 is a flowchart of a data transmission protection method according to an embodiment of the present invention. As shown in FIG. 1, the method is used by a STA, and the method includes:
Step 101: The station receives resource allocation information sent by an access point, where the resource allocation information includes a transmission channel allocated by the access point to at least two stations that include the station.
Step 102: The station obtains, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel allocated to the station.
Step 103: Determine whether each overlapping subchannel in the at least one overlapping subchannel used by the station to send the transmission protection message is used only by the station to send the transmission protection message.
Step 104: If a current overlapping subchannel is used only by the station to send the transmission protection message, the station sends the transmission protection message on the current overlapping subchannel.
Step 105: If a current overlapping subchannel is further used by another station to send the transmission protection message, the station sends the transmission protection message on the current overlapping subchannel according to a preset rule.

If the current overlapping subchannel is further used by another station to send the transmission protection message, multiple stations that send transmission protection messages on the current overlapping subchannel sequentially send the transmission protection messages on the current overlapping subchannel, where the multiple stations include the station.

The transmission protection message is used to protect downlink data transmission from the access point to the station, the transmission protection message includes duration, and the duration is used to indicate an exclusive time of the station for the transmission channel allocated to the station.

Embodiments of the present invention provide a data transmission protection method and apparatus. A station receives resource allocation information sent by an access point, where the resource allocation information includes a transmission channel allocated by the access point to the station; the station obtains, according to a status of mutual overlap between the allocated transmission channel and multiple subchannels, at least one overlapping subchannel used by the station to send a transmission protection message, and sends the transmission protection message on the at least one overlapping subchannel, where the transmission protection message includes duration, and the duration indicates an exclusive time of the station for the transmission channel allocated to the station, so that data transmission from the access point to the station is protected, and another third-party station sets duration of the another third-party station according to the duration in the transmission protection message. Therefore, a time and a frequency band for data transmission that needs to be performed from the AP to the STA are shunned, further, data transmission sent from the AP to the STA is protected, and data transmission reliability is improved.

There are many factors, for example, an amount of transmitted data, a channel condition, and the like, for determining a size of a bandwidth occupied by each station. How to allocate a bandwidth to each station is not a focus of the present invention, and is not described in detail herein.

That "the resource allocation information includes a transmission channel allocated by the access point to at least two stations that include the station" includes two basic scenarios: in a scenario in which only OFDMA is used, the resource allocation information includes multiple transmission channels, and each transmission channel is corresponding to one station; in a scenario in which only MU-MIMO is used, the resource allocation information includes only one transmission channel, and the transmission channel is corresponding to multiple stations, that is, the multiple stations perform transmission by using the same transmission channel. In addition, a hybrid scenario may also occur: a transmission channel is divided into multiple blocks in a frequency domain, and either the OFDMA or the MU-MIMO is used in the blocks, that is, both the OFDMA and the MU-MIMO may be used in a communications system. In this case, the resource allocation information includes transmission channel allocation for each block, and in the transmission channel allocation for each block, a rule for the basic scenarios is followed for whether the OFDMA or the MU-MIMO is used. Any scheduled station is certainly located in a block, and resource allocation for any block is certainly corresponding to one station.

A protocol in this embodiment of the present invention is the 802.11 protocol. In this embodiment of the present invention, bandwidths of multiple subchannels may be equal. For example, a bandwidth of each subchannel may be 20 MHZ. A 20-MHZ subchannel is a frequency band supported by an existing device (where the existing device is a legacy device relative to a subsequent new device that supports the solution in this embodiment of the present invention). Therefore, this embodiment of the present invention may be compatible with a protocol supported by the legacy device, so that system upgrade costs can be reduced.

Frequency bands between multiple scheduled stations and the access point are the same. For example, in the 802.11ac protocol, an operating band between an access point and a station is 5 GHz, the frequency band is divided into multiple 20-MHZ subchannels, and each subchannel has a determined center frequency. The operating band and subchannel division are specified in the protocol that both the access point and the station need to follow. A protocol that a network follows may be learned from the access point when the station accesses the network.

In another embodiment of the present invention, bandwidths of multiple subchannels may be unequal. For example, an operating band between an access point and a station is 40 MHZ, and may be divided into three subchannels whose bandwidths are respectively 10 MHZ, 20 MHZ, and 10 MHZ.

In this embodiment of the present invention, the transmission protection message is a clear to send CTS frame or an ACK frame. The two types of frames are frames that can be supported by an existing device (where the existing device is a legacy device relative to a subsequent new device that supports the solution in this embodiment of the present invention). Therefore, this embodiment of the present invention may be compatible with a protocol supported by the legacy device, so that system upgrade costs can be reduced.

In this embodiment of the present invention, all subchannels may have same bandwidths, for example, are all 20-MHZ subchannels. In this case, the existing device can be compatible, and applicability of this embodiment of the present invention can be improved. In addition, the legacy device does not need to be replaced when an existing transmission system is being upgraded, and therefore, system upgrade costs are relatively low. Further, when the transmission protection message is a CTS frame or an ACK frame, the applicability of this embodiment of the present invention can be further improved, so that the protocol supported by the existing device is better compatible.

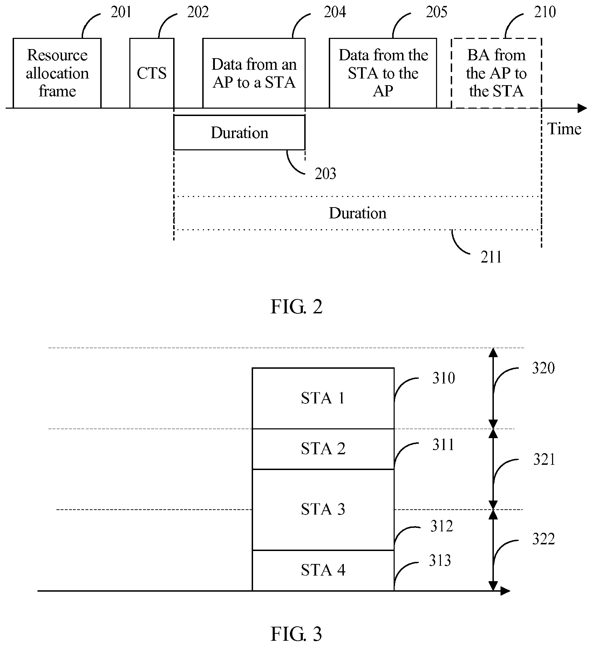

In each embodiment of the present invention, the overlap refers to entire coverage or partial coverage, or may be a combination of entire coverage and partial coverage. FIG. 3 is a schematic diagram of overlap between multiple subchannels and a transmission channel of a STA according to an embodiment of the present invention. As shown in FIG. 3, an operating band is divided into a subchannel 320, a subchannel 321, and a subchannel 322. A transmission channel of a STA 1 is a transmission channel 310, a transmission channel of a STA 2 is a transmission channel 311, a transmission channel of a STA 3 is a transmission channel 312, and a transmission channel of a STA 4 is a transmission channel 313.

As shown in FIG. 3, the subchannel 320 covers the entire transmission channel 310 of the STA 1; the subchannel 321 covers the entire transmission channel 311 of the STA 2 and a part of the transmission channel 312 of the STA 3, which, for short, may be that the subchannel 321 covers the transmission channel 311 and the transmission channel 312; the subchannel 322 covers a part of the transmission channel 312 of the STA 3 and the entire transmission channel 313 of the STA 4, which, for short, may be that the subchannel 322 covers the transmission channel 312 and the transmission channel 312.

The transmission channel 310 of the STA 1 covers a part of the subchannel 320; the transmission channel 311 of the STA 2 covers a part of the subchannel 321; the transmission channel 312 of the STA 3 covers a part of the subchannel 321 and a part of the subchannel 322; the transmission channel 313 of the STA 4 covers a part of the subchannel 322.

Overlapping is mutual, that is, for any STA, for example, the STA 3, the transmission channel 312 of the STA 3 covers the subchannel 321 and the subchannel 322, and the transmission channel 312 of the STA 3 is also covered by the transmission channel subchannel 321 and the subchannel 322.

In this embodiment of the present invention, data sent from a STA to an AP may be referred to as uplink data or uplink data transmission; data sent from an AP to a STA may be referred to as downlink data or downlink data transmission.

The following briefly describes a principle of protecting data transmission by using duration. FIG. 2 is a schematic diagram of data transmission on a transmission channel according to an embodiment of the present invention. An AP and a STA are not shown in FIG. 2. As shown in FIG. 2, the AP sends resource allocation information 201 to a STA, and the STA sends a transmission protection message in a broadcast manner. In this embodiment, the transmission protection message is a CTS frame 202, and the CTS frame 202 carries duration 203. Within the duration 203, only data 204 from the AP to the STA is sent on the transmission channel, so as to protect data transmission 204.

In this embodiment of the present invention, resource allocation information may be a trigger (Trigger) frame used to trigger subsequent data transmission.

Certainly, on the transmission channel, only the downlink data 204 from the AP to the STA may be sent, or only uplink data 205 from the STA to the AP may be sent.

The duration 203 in FIG. 2 indicates a start moment, an end moment, and a time length of duration. Actually, the duration is only a numeric value, and an NAV (Network Allocation Vector, network allocation vector) is used to measure the end moment of the duration. The NAV is equivalent to a backoff timer, and an initial value of the NAV is the duration. When a value of the NAV becomes 0, it indicates that an exclusive time of the STA ends. Therefore, the duration 203 in FIG. 2 may also be considered to as an NAV corresponding to the duration.

In this embodiment of the present invention, a function of the CTS frame sent by the STA is to protect downlink data transmission from the AP to the STA. Therefore, if only uplink data from the STA to the AP needs to be transmitted after the resource allocation information is transmitted, data transmission does not need to be protected. If there is both downlink data transmitted from the AP to the STA and uplink data transmitted from the STA to the AP, and the AP does not need to feed back an instant confirmation message to the STA after data transmission from the STA to the AP ends, transmission protection is required, and the transmission protection only needs to last till data transmission from the AP to the STA ends, for example, lasts for the duration 203 shown in FIG. 2, and data transmission from the STA to the AP does not need to be protected, so as to avoid overprotection. If there is both data transmitted from the AP to the STA and data transmitted from the STA to the AP, and the AP needs to feed back an instant confirmation message to the STA after data transmission from the STA to the AP ends, in this case, the transmission protection needs to end till sending of an instant confirmation message BA 210 is completed, for example, lasts for duration 211 shown in FIG. 2, so that the instant confirmation message BA 210 from the AP to the STA is also protected.

In conclusion, duration in a transmission protection message sent by each STA may be determined according to a specific scheduling status of the STA. Duration in CTS frames sent by different STAs may be the same or different, so that transmission is flexibly protected.

In this embodiment of the present invention, the CTS frame may be replaced with an ACK frame. In this embodiment of the present invention, alternatively, the transmission protection message may be another frame that can be understood and decoded by an existing device. In subsequent embodiments, the CTS frame is used as an example for description.

In this embodiment of the present invention, a preferred solution for sending the transmission protection message on the at least one overlapping subchannel is to send the transmission protection message on all overlapping subchannels.

In the transmission protection method in this embodiment of the present invention, a STA sequentially sends a transmission protection message on multiple overlapping subchannels in a broadcast manner, so that another third-party STA sets duration of the another third-party STA according to duration in the transmission protection message. Therefore, a time and a frequency band for data transmission that needs to be performed from an AP to the STA are shunned, further, data transmission sent from the AP to the STA is protected, and data transmission reliability is improved.

### Embodiment 2

Step 104 in which if a current overlapping subchannel is used only by the station to send the transmission protection message, the station sends the transmission protection message on the current overlapping subchannel includes:
the station sends the transmission protection message on the current overlapping subchannel when a preset time length elapses after the station receives the resource allocation information.

Step 105 in which if a current overlapping subchannel is further used by another station to send the transmission protection message, the station sends the transmission protection message on the current overlapping subchannel according to a preset rule includes:
the station sends the transmission protection message on the current overlapping subchannel according to the preset rule when a preset time length elapses after the station receives the resource allocation information.

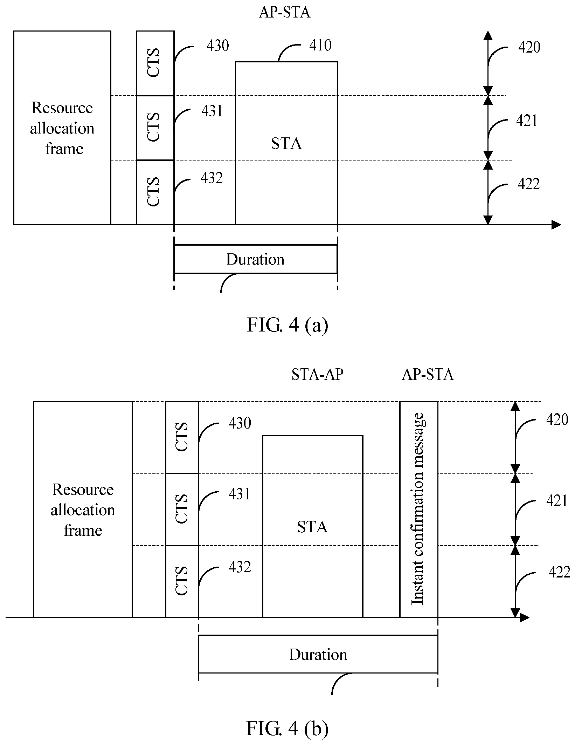

FIG. 4 (a) and FIG. 4 (b) are schematic diagrams of sending a CTS frame by a STA according to an embodiment of the present invention. In scenarios shown in FIG. 4 (a) and FIG. 4 (b), a transmission channel of a STA covers two subchannels and a part of one subchannel, and only one STA sends a CTS frame on each subchannel.

In FIG. 4 (a), a transmission channel 410 of a STA covers a part of a subchannel 420, and further covers two entire subchannels. The two entirely covered subchannels are respectively a subchannel 421 and a subchannel 423. On subchannels 420, 421, and 422, only the STA sends a CTS frame. FIG. 4 (a) shows only downlink data transmission from an AP to the STA. After the resource allocation information, the STA sends a CTS frame 430, a CTS frame 431, and a CTS frame 432 respectively on the subchannel 420, the subchannel 421, and the subchannel 422. The CTS frame 430, the CTS frame 431, and the CTS frame 432 sent on the different subchannels are the same and include same duration 440. Data transmission from the AP to the STA may be protected according to the duration.

As shown in FIG. 4 (b), a transmission channel 411 of a STA covers a part of a subchannel 420, and further covers two entire subchannels. The two entirely covered subchannels are respectively a subchannel 421 and a subchannel 423. On subchannels 420, 421, and 422, only the STA sends a CTS frame. Between the STA and an AP, there is data transmitted only from the STA to the AP, but there is a status of an instant confirmation message from the AP to the STA.

In this case, after the resource allocation information, the STA sends a CTS frame 430, a CTS frame 431, and a CTS frame 432 respectively on the subchannel 420, the subchannel 421, and the subchannel 422. The CTS frame 430, the CTS frame 431, and the CTS frame 432 sent on the different subchannels are the same, and include same duration 441.

When a transmission channel of a STA covers multiple subchannels or a part of multiple subchannels, the STA sends a CTS frame on each subchannel. The CTS frame includes duration and can be used to protect, on each subchannel, data transmitted from the AP to the STA.

The scenarios shown in FIG. 4 (a) and FIG. 4 (b) are merely used to describe a location at which a CTS frame is sent, and do not involve a case in which multiple STAs send a CTS frame on a subchannel.

### Embodiment 3

Step 104 in which if a current overlapping subchannel is used only by the station to send the transmission protection message, the station sends the transmission protection message on the current overlapping subchannel includes:
the station sends the transmission protection message on the current overlapping subchannel when a preset time length elapses after the station completes sending of uplink data to the access point.

Step 105 in which if a current overlapping subchannel is further used by another station to send the transmission protection message, the station sends the transmission protection message on the current overlapping subchannel according to a preset rule includes:
the station sends the transmission protection message on the current overlapping subchannel according to the preset rule when a preset time length elapses after the station completes sending of uplink data to the access point.

If between the STA and the AP, there is data transmitted only from the STA to the AP, but there is a status of an instant confirmation message from the AP to the STA, in this case, the instant confirmation message from the AP to the STA needs to be protected. The transmission protection message sent by the STA may be subsequent to uplink data transmission from the STA to the AP in a time order, so as to protect transmission of the instant confirmation message from the AP to the STA.

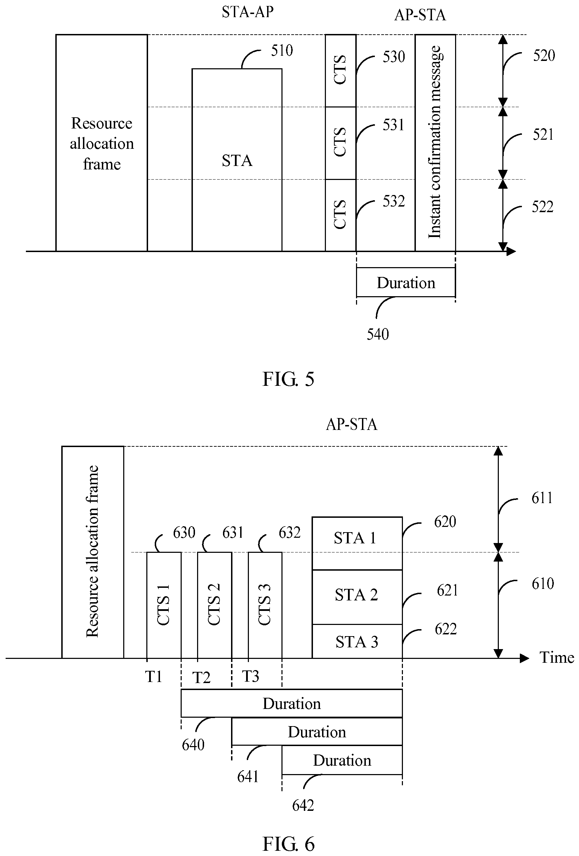

In Embodiment 2, the transmission protection message sent by the STA is subsequent to the resource allocation information, and in Embodiment 3, between the STA and the AP, there is data transmitted only from the STA to the AP, but there is a status of an instant confirmation message from the AP to the STA. In this case, the transmission protection message sent by the STA may be subsequent to the resource allocation information in a time order as shown in FIG. 4 (b), or may be subsequent to uplink data transmission from the STA to the AP in a time order as shown in FIG. 5, so as to protect transmission of the instant confirmation message from the AP to the STA.

FIG. 5 is a schematic diagram of sending a CTS frame by a STA according to an embodiment of the present invention. In an application scenario shown in FIG. 5, a status of overlap between a subchannel and a transmission channel of a STA is shown in FIG. 4 (a) and FIG. 4 (b). Between the STA and an AP, there is data transmitted only from the STA to the AP, but there is a status of an instant confirmation message from the AP to the STA.

In this case, CTS frames 530, 531, and 532 sent by the STA are subsequent to uplink data transmission from the STA to the AP, and the CTS frames 530, 531, and 532 include same duration 540.

### Embodiment 4

Step 105 in which the station sends the transmission protection message on the current overlapping subchannel according to a preset rule includes:
the station obtains, according to the resource allocation information, the multiple stations that send the transmission protection messages on the current overlapping subchannel;
the station sorts the multiple stations according to a sorting rule, where the sorting is used to determine an order of sending, by the multiple stations, the transmission protection messages on the current overlapping subchannel, and the multiple stations include the station;
the station obtains, according to the sorting, the order of sending an transmission protection message by the station;
the station obtains a corresponding first sending moment according to the order of sending the transmission protection message; and
the station sends the transmission protection message on the current overlapping subchannel at the first sending moment.

The sorting rule is a preset sorting rule, or a sorting rule indicated in the resource allocation information.

The preset sorting rule may include:
sorting in descending order of station IDs;
sorting in ascending order of station IDs; or
sorting according to an order of stations in the resource allocation information.

FIG. 6 is a schematic diagram of sending a transmission protection message by a STA according to an embodiment of the present invention. In a scenario shown in FIG. 6, the transmission protection message is a CTS frame, and the CTS frame is sent after resource allocation information is received. In the scenario shown in FIG. 6, a subchannel 610 covers transmission channels of multiple STAs, where the subchannel 610 covers a part of a transmission channel 620 of a STA 1, and covers an entire transmission channel 621 of a STA 2 and an entire transmission channel 622 of a STA 3. IDs of the three STAs are respectively 1, 2, and 3, and corresponding transmission channels of the three STAs are respectively the transmission channel 620, the transmission channel 621, and the transmission channel 622. The transmission channel 620 of the STA 1 also covers a part of a subchannel 611.

In the scenario, a sending rule is sorting in ascending order of station IDs. The STA 1 obtains, from the resource allocation information, the IDs of the multiple STAs covered by the subchannel 610 that are respectively 1, 2, and 3, and learns, after sorting in ascending order, that the STA first sends the CTS frame.

On the subchannel 610, an interframe space between frames on the channel may be preset. For example, the first CTS frame is sent at a moment T1 that is a preset time length later than receiving of the resource allocation information, the second CTS frame is sent at a moment T2 that is a time length a later than the moment T1, and the third CTS frame is sent at a moment T3 that is the time length a later than the moment T2. Therefore, a CTS frame sending moment may be learned by learning a ranking of the STA for sending a CTS frame.

In this embodiment of the present invention, the preset time length may be a short interframe space, and the time length a may be a sum of a short interframe space and a CTS transmission time length. A time length of the short interframe space is specified in the protocol. A frame that carries the transmission protection message generally has a fixed length, and is sent in a specific modulation and coding scheme; therefore, a transmission time length of the frame is fixed. For example, the CTS frame is sent on a 20-MHZ subchannel in a lowest-order modulation and coding scheme, for which a transmission time length of 44 microseconds is required.

As shown in FIG. 6, the STA 1 sends a CTS frame 630 at the moment T1. Likewise, the STA 2 sends a CTS frame 631 at the moment T2, and the STA 3 sends a CTS frame 632 at the moment T3. The CTS frame 630 includes duration 640, the CTS frame 631 includes duration 641, and the CTS frame 640 includes duration 641.

In the transmission protection method in this embodiment of the present invention, when a subchannel covers transmission channels of multiple STAs, that is, when the multiple STAs send CTS frames on the same subchannel, the STAs sequentially send the CTS frames according to a specific order, to implement transmission protection, which resolves a problem of how to send, by multiple STAs, a CTS frame for transmission protection when a same AP schedules the multiple STAs, thereby protecting subsequent downlink data transmission from the AP to the multiple STAs, and improving transmission reliability.

### Embodiment 5

Step 105 of sending the transmission protection message on the current overlapping subchannel according to the preset rule may include:
obtaining a second sending moment according to a transmission protection message sending order or a second sending moment indication information designated in the resource allocation information; and
sending the transmission protection message on the current overlapping subchannel at the second sending moment.

The second sending moment is a moment used for sending the transmission protection message, and each station that sends the transmission protection message on the current overlapping subchannel is corresponding to one second sending moment.

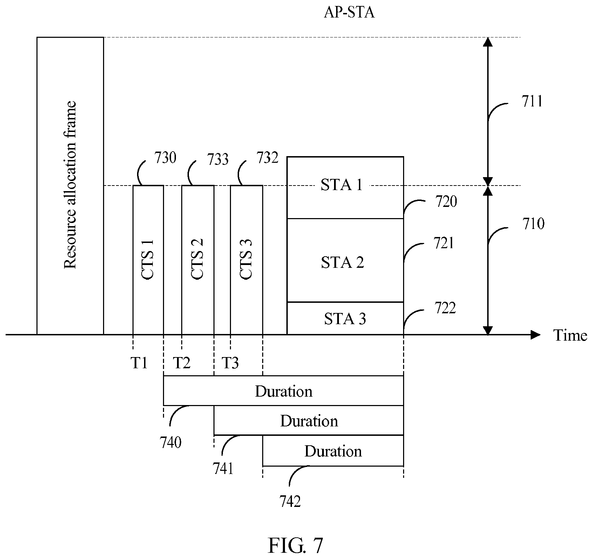

FIG. 7 is a schematic diagram of sending a transmission protection message by a STA according to an embodiment of the present invention. In a scenario shown in FIG. 7, the transmission protection message is a CTS frame. A subchannel 710 covers transmission channels of multiple STAs, where the multiple STAs are respectively a STA 1, a STA 2, and a STA 3, and the covered multiple transmission channels are respectively a transmission channel 720, a transmission channel 721, and a transmission channel 722.

When each STA can receive scheduling information of only some STAs, for example, when a STA is set to receive scheduling information of only the STA, resource allocation information sent by an AP to each STA may include a sending ranking of the STA for sending a CTS frame.

As shown in FIG. 7, a sending order designated by the AP is the STA 1, the STA 2, and the STA 3. A CTS frame sending interval is preset, for example, the first CTS frame is sent at a moment T1 that is a preset time length later than receiving of the resource allocation information; the second CTS frame is sent at a moment T2 that is a time length b later than an end to sending of the CTS frame sent at the moment T1; the third CTS frame is sent at a moment T3 that is the time length b later than an end to sending of the CTS frame sent at the moment T2. Therefore, a CTS frame sending moment may be learned by learning a ranking of the STA for sending a CTS frame. Both the preset time length and the time length b may be a short interframe space.

In this embodiment, the STA 1 sends a CTS frame 730 at the moment T1, the STA2 sends a CTS frame 731 at the moment T2, and the STA 3 sends a CTS frame 732 at the moment T3. The CTS frame 730 includes duration 740, the CTS frame 731 includes duration 731, and the CTS frame 740 includes duration 741. Downlink data sent by different STAs is protected by using different duration.

In this embodiment, alternatively, the AP may directly designate a moment for sending a CTS frame by each STA, for example, designate the STA 1 to send a CTS frame at the moment T1, the STA 2 to send a CTS frame at the moment T2, and the STA 3 to send a CTS frame at the moment T3.

In this embodiment of the present invention, an AP designates an order of sending CTS frames by STAs or designates a second sending moment for sending a transmission protection message by each STA, which prevents a STA from receiving excessive redundant information, for example, a sending moment of another STA, and can also resolve a problem of how to send a CTS frame when a STA cannot receive scheduling information of all STAs. Therefore, data subsequently sent to multiple STAs by the AP can be protected, and data transmission reliability can be improved.

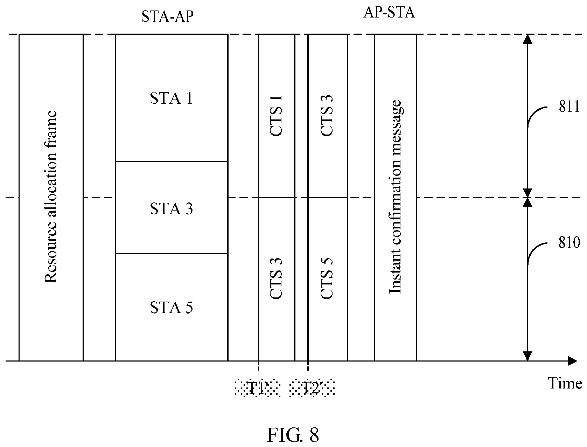

FIG. 8 is a schematic diagram of sending a transmission protection message by a STA according to an embodiment of the present invention. In an application scenario shown in FIG. 8, there is uplink data transmission sent from a STA to an AP and an instant confirmation message sent by the AP to the STA, and only the instant confirmation message from the AP to the STA needs to be protected. In this case, the STA may send a CTS frame after uplink data transmission sent from the STA to the AP.

A moment for sending a CTS frame by each STA may be determined according to an uplink transmission window time length of the station and a designated sending order of the transmission protection message. For example, the first STA sends a CTS frame at a moment T1' that is a preset time length later than completion of sending of uplink data to the AP by the first STA, and the second STA sends a CTS frame at a moment T2' that is a time length c later than completion of sending of the CTS frame sent at the moment T1'.

Both the preset time length and the time length c may be a short interframe space.

### Embodiment 6

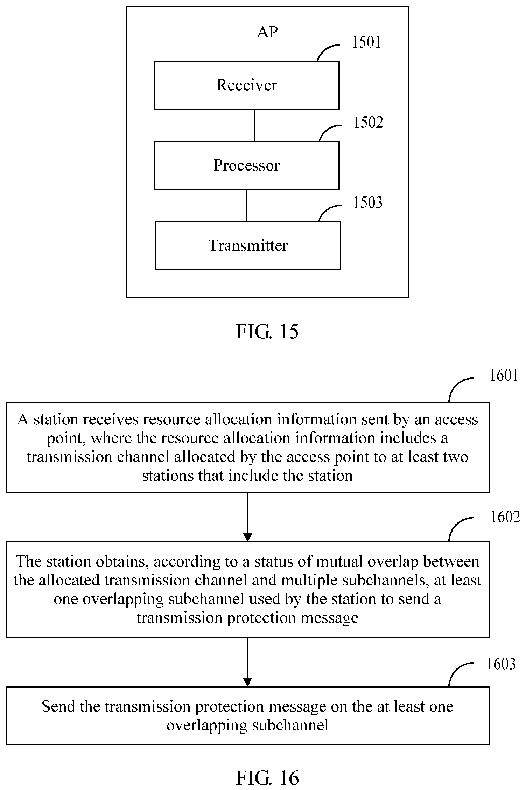

This embodiment of the present invention further provides a data transmission protection method. As shown in FIG. 16, the method includes:
Step 1601: A station receives resource allocation information sent by an access point, where the resource allocation information includes a transmission channel allocated by the access point to the station, and the transmission channel is a frequency band allocated by the access point to the station.
Step 1602: The station obtains, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel of the station.
Step 1603: Send the transmission protection message on the at least one overlapping subchannel.

If a current overlapping subchannel on which the station sends the transmission protection message is further used by another station to send the transmission protection message, multiple stations that send transmission protection messages on the current overlapping subchannel simultaneously send the transmission protection messages on the current overlapping subchannel, where the multiple stations include the station.

The simultaneously sent transmission protection messages are the same.

The transmission protection message is used to protect downlink data transmission from the access point to the station, the transmission protection message includes duration, and the duration is used to indicate an exclusive time of the station for the transmission channel allocated to the station.

Further, bandwidths of the multiple subchannels may be equal.

Further, the transmission protection message may be a clear to send CTS frame or an ACK frame.

Optionally, step 1603 of sending the transmission protection message on the at least one overlapping subchannel includes:
sending the transmission protection message when a preset time length elapses after the resource allocation information is received; or
sending the transmission protection message when a preset time length elapses after sending of uplink data transmission to the access point is completed.

Optionally, in this embodiment of the present invention, step 1603 of sending the transmission protection message on the at least one overlapping subchannel includes:
after the resource allocation information is received, sending, according to a third sending moment designated in the resource allocation information, the transmission protection message at the third sending moment; or
after sending of uplink data to the access point is completed, sending, according to a third sending moment designated in the resource allocation information, the transmission protection message at the third sending moment.

The third sending moment is a moment that is allocated by the access point to the station and that is used by the station to send the transmission protection message.

In this embodiment, if multiple STAs need to send CTS frames on one subchannel, the multiple STAs simultaneously send transmission protection messages, and the simultaneously sent transmission protection messages are the same.

Further, that the simultaneously sent transmission protection messages are the same may include:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

In order that scrambling code sequences of multiple stations are the same, a simple implementation method is that the multiple stations use a same scrambling code generator initial state value. For example, the multiple stations use a same predefined scrambling code generator initial state value, use a scrambling code sequence the same as that of a frame that carries the resource allocation information, use a sequence obtained by mapping from an AP identifier based on a same rule, use a sequence obtained by mapping from current duration based on a same rule, or use a sequence obtained by mapping from an AP identifier or current duration based on a same rule. The current duration is duration carried in the frame that carries the resource allocation information, or duration to be carried in the CTS frame.

That the CTS frames have same MAC layer content may be: the transmission protection messages include RA fields that have a same value, and include same duration. For example, the RA field is an address of the AP.

The preset time length may be a short interframe space.

When a relatively large quantity of STAs are scheduled, a large quantity of transmission protection messages are sent. Sending the transmission protection message at different time brings extremely high overheads. In addition, if one subchannel covers transmission channels of multiple STAs, and a STA has a relatively low ranking for sending a transmission protection message, there is a relatively long interval between receiving of the resource allocation information by the STA and sending of the transmission protection message by the STA, and during the interval, the STA may receive information from another station, for example, a CTS frame from another OBSS STA. In this case, further sending of the transmission protection message by the STA may cause interference to transmission by the OBSS STA. When a same subchannel covers transmission channels of multiple STAs, the multiple STAs simultaneously send transmission protection messages, which can resolve the foregoing problem, so that system overheads are reduced and potential interference is reduced.

While MAC layer content is the same and scrambling code sequences are the same, modulation and coding schemes further need to be the same to ensure that a superposed physical waveform of the simultaneously sent transmission protection messages can be decoded. The modulation and coding scheme includes two aspects: a modulation scheme and a channel coding scheme. A preferred modulation and coding scheme is: BPSK (Binary Phase Shift Keying, binary phase shift keying) is used as the modulation scheme, and a BCC (Binary Convolutional Code, binary convolutional code) whose bit rate is 1/2 is used in the channel coding scheme.

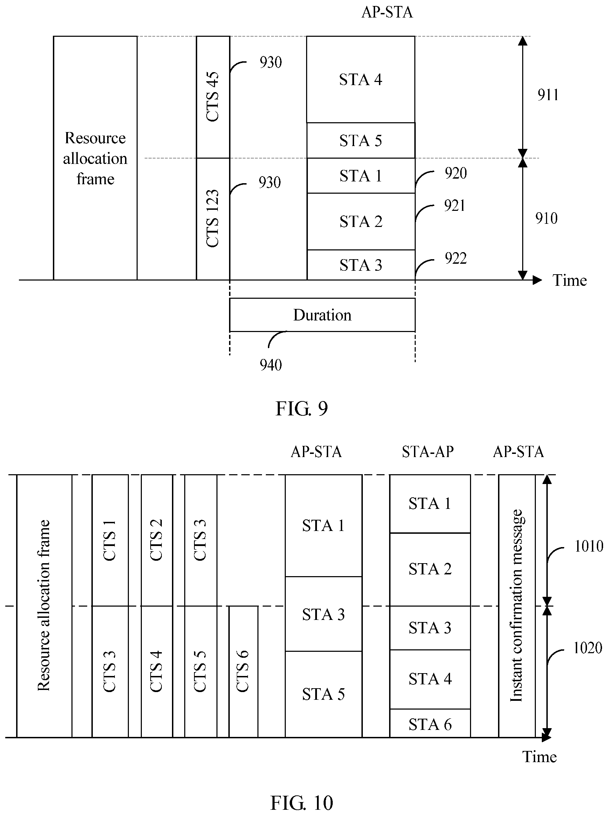

FIG. 9 is a schematic diagram of sending a transmission protection message by a STA according to an embodiment of the present invention. In a scenario shown in FIG. 9, the transmission protection message is a CTS frame. A subchannel 910 covers transmission channels of multiple STAs, where the multiple STAs are respectively a STA 1, a STA 2, and a STA 3, and the covered multiple transmission channels are respectively a transmission channel 920, a transmission channel 921, and a transmission channel 922. A subchannel 911 covers transmission channels of a STA 4 and a STA 5.

The STA 1, the STA 2, and the STA 3 send a CTS frame 830 when a preset time length elapses after the STA 1, the STA 2, and the STA 3 receive resource allocation information.

Because all STAs receive the resource allocation information at a same moment, and preset interframe space times are also the same, multiple STAs send a CTS frame at a same moment, that is, the multiple STAs simultaneously send the CTS frame.

Actually, the CTS frame 830 is obtained by superposition of multiple same CTS frames.

A third sending moment may also be designated in the resource allocation information, so that the STA sends the CTS frame at the third sending moment after receiving the resource allocation information.

To ensure that a signal obtained by superposition of multiple CTS frames can be correctly decoded, in this embodiment, the transmission protection messages sent by multiple stations on the overlapping subchannel have same frame MAC layer content, and are scrambled by using a same scrambling code sequence.

According to a current rule, when sending a data part of a transmission frame, each STA randomly selects a scrambling code generator initial state (a 7-bit sequence) value to generate a scrambling code sequence, and then scrambles data by using the scrambling code sequence. Consequently, two CTS frames may be completely different in physical waveforms even though the two CTS frames include completely same content. Because scrambling code generator initial state values randomly selected by STAs are different, scrambling code sequences are different, and results obtained by scrambling same data are also different. Therefore, to ensure that CTSs sent by different STAs can be superposed in physical waveforms, multiple STAs whose transmission channels are covered by a same subchannel generally use a same scrambling code generator initial state value. For example, all STAs use a scrambling code generator initial state value the same as that of the resource allocation information. However, because the resource allocation information may be an NDP frame, that is, includes neither a data part nor a scrambling code generator initial state value, the STAs may select another value as a scrambling code generator initial state value for generating CTSs by the STAs. Examples are as follows.

A predefined 7-bit scrambling code generator initial state value is used.

An AP explicitly indicates the 7-bit scrambling code generator initial state value in a trigger frame.

Seven bits, for example, seven least significant bits, in a MAC address of the AP are used.

Seven bits in a CRC of a trigger frame HEW-SIG-A or HEW-SIG-B are used.

It should be specially noted that, a same scrambling code sequence needs to be used for multiple CTSs only on a same subchannel, and different scrambling code sequences may be used for CTSs on different subchannels. For example, different scrambling code sequences may be used for CTSs on two subchannels 910 and 911 in FIG. 9. However, it is a simple and also preferred practice that a same scrambling code sequence is used on all subchannels.

In addition, according to an implementation method in a current standard, when a station performs sending by using multiple subchannels, a phase of a subcarrier on each subchannel may have different-extent phase rotation, so as to reduce a peak-to-average power ratio of a time domain signal, and facilitate receiving by another device. In the present invention, this rule also needs to be followed during CTS sending, that is, a STA determines, according to a predetermined rule for all subchannels included in an entire bandwidth scheduled by the AP, phase rotation of all the subchannels, and uses the phase rotation during CTS sending. Because multiple STAs follow a same phase rotation rule, phase rotation of multiple CTSs on a same subchannel is the same, and a signal obtained by superposition of the multiple CTSs can still be decoded.

In the method in this embodiment of the present invention, multiple STAs simultaneously send CTS frames, which can reduce system overheads and reduce interference.

This embodiment of the present invention provides multiple specific implementation manners. In a practical application, a specific implementation manner is set during initialization, and therefore, there is no need to further indicate a manner during running.

In the embodiment shown in FIG. 9, a STA sends a CTS frame after receiving resource allocation information. Actually, between a STA and an AP, there is data transmitted only from the STA to the AP, but there is a status of an instant confirmation message from the AP to the STA. Alternatively, a STA may send a CTS frame after completing sending of uplink data transmission to an AP. For details, reference may be made to embodiments shown in FIG. 5 and FIG. 8.

### Embodiment 7

After step 101, before step 102, that is, after the resource allocation information sent by the access point is received, after the station receives the resource allocation information sent by the access point, and before the at least one overlapping subchannel used by the station to send the transmission protection message is obtained, the method may further include:
obtaining, by the station, transmission protection indication information from the resource allocation information, where the transmission protection indication information indicates whether the station is to send the transmission protection message or indicates whether the station is allowed to send the transmission protection message; and
when the transmission protection indication information indicates that the station is to send the transmission protection message or indicates that the station is allowed to send the transmission protection message, obtaining the at least one overlapping subchannel used by the station to send the transmission protection message.

Not all STAs scheduled by the AP need downlink transmission protection. For example, a STA extremely close to the AP needs no transmission protection. Therefore, the resource allocation information may carry indication information indicating whether to perform transmission protection. This embodiment may be applied to all embodiments of the present invention.

For the indication information that is carried in the resource allocation information and indicates whether the transmission protection message needs to be used, there may be the following solutions:
Solution 1: The AP uses a 1-bit indication in the resource allocation information, and the indication means: transmission protection is performed for all the scheduled STAs, or transmission protection is performed for none of the scheduled STAs.
Solution 2: The AP indicates, in the resource allocation information, whether to perform transmission protection for each STA, for example, may perform indication by using a bitmap (bitmap).
   The solution 2 needs more overheads but is more flexible, can effectively reduce a quantity of CTSs, and can further reduce impact of delay spread.
Solution 3: The resource allocation information sent by the AP does not expressly indicate whether transmission protection is required, and each STA determines, according to a status of the STA, whether transmission protection is to be performed. The solution is applicable only to a case in which CTSs are simultaneously sent.
   A specific implementation method is: after the AP sends the resource allocation information, if within a PIFS (Point Coordination Function Interframe Space, point coordination function interframe space) time, the AP receives a CTS frame sent by the STA or detects that a channel is busy, the AP considers that at least one STA needs transmission protection, and the AP starts to transmit data at a moment that is two SIFSs and a transmission time length of one CTS later than an end to sending of a trigger frame; otherwise (if the AP detects, within a PIFS time, that a channel is always idle), the AP starts to transmit data at a moment that is the PIFS time later than an end to sending of a trigger frame. From a perspective of the STA, if the STA needs transmission protection, the STA sends the CTS at a moment that is an SIFS later than receiving of the resource allocation information. The PIFS is greater than the SIFS. Certainly, in addition to a trigger frame end, an uplink data end may be used as a start moment of a time.
Solution 4: The AP uses a 1-bit indication in the resource allocation information, and the indication means: transmission protection is allowed, but each STA determines, according to a status of the STA, whether transmission protection is to be performed; or transmission protection is not allowed.
   A specific implementation method is: when an indicator bit is set to 0, transmission protection is not allowed for the scheduled STA; when an indicator bit is set to 1, after the AP sends the resource allocation information, if within a PIFS (Point Coordination Function Interframe Space, point coordination function interframe space) time, the AP receives a CTS frame sent by the STA or detects that a channel is busy, the AP considers that at least one STA needs transmission protection, and the AP starts to transmit data at a moment that is two SIFSs and a transmission time length of one CTS later than an end to sending of a trigger frame; otherwise (if the AP detects, within a PIFS time, that a channel is always idle), the AP starts to transmit data at a moment that is the PIFS time later than an end to sending of a trigger frame. From a perspective of the STA, if the received indicator bit is set to 1 and transmission protection needs to be performed for the STA, the STA sends the CTS at a moment that is an SIFS later than receiving of the resource allocation information. The PIFS is greater than the SIFS. Certainly, in addition to a trigger frame end, an uplink data end may be used as a start moment of a time.
Solution 5: The AP implicitly indicates, by using a trigger frame, whether to perform transmission protection. In the method, some existing fields of the trigger frame generally need to be reused, and a final effect of the method is similar to that of the solution 1 or the solution 4.

In an example, the solution 4 is implemented by means of an implicit indication. A specific implementation method is: when a length field in an L-SIG (Legacy SIGNAL, legacy signaling) field of the trigger frame is set to 0, it indicates that the AP allows transmission protection to be performed for the scheduled STA; when a value of the length field in the L-SIG field of the trigger frame is greater than 0, it indicates that the AP does not allow transmission protection to be performed for the scheduled STA.

It is determined, according to indication information indicating whether to perform transmission protection, whether to perform transmission protection, which can avoid overprotection and can also reduce system resources.

### Embodiment 8

This embodiment of the present invention further provides a data transmission protection method. The method includes:
sending, by an access point, resource allocation information, where the resource allocation information includes information about a transmission channel allocated to at least two stations, so that a station that receives the resource allocation information obtains, according to the resource allocation information, at least one overlapping subchannel used by the station to send a transmission protection message, and sends the transmission protection message on each overlapping subchannel in the at least one overlapping subchannel; and
if at least two stations send transmission protection messages on the current overlapping subchannel, sequentially sending, by the at least two stations, the transmission protection messages.

An operating band between the access point and the station is divided into multiple subchannels, and the overlapping subchannel is a subchannel that overlaps the transmission channel of the station.

The transmission protection message is used to protect downlink data from the access point to the station that sends the transmission protection message, the transmission protection message includes duration, and the duration is used to indicate an exclusive time, of the station that sends the transmission protection message, for the transmission channel allocated to the station.

Optionally, in this embodiment of the present invention, after sending of the resource allocation information is completed, if within a first time length, the transmission protection message sent by the station is received or it is detected that the operating band is busy, the access point transmits the downlink data when a second time length elapses after sending of the resource allocation information ends; or
after sending of the resource allocation information is completed, if within a first time length, it is detected that the operating band is idle, the access point transmits the downlink data when a third time length elapses after sending of the resource allocation information ends.

Optionally, in this embodiment of the present invention, after receiving of uplink data sent by the station is completed, if within a first time length, the transmission protection message sent by the station is received or it is detected that the operating band is busy, the downlink data is transmitted when a second time length elapses after the foregoing data receiving ends; or
after receiving of uplink data sent by the station is completed, if within a first time length, it is detected that the operating band is idle, the downlink data is transmitted when a third time length elapses after the foregoing data receiving ends.

Optionally, in this embodiment, the first time length may be a time length of a distributed interframe space, the second time length may be a sum of a time length of two short interframe spaces and a transmission time length of one transmission protection message, and the third time length may be a time length of a distributed interframe space.

The time length of the distributed interframe space is greater than the time length of the short interframe space.

Optionally, in this embodiment, the first time length may be a time length of a point coordination function interframe space, the second time length may be a sum of a time of two short interframe spaces and a transmission time length of one transmission protection message, and the third time length may be a time length of a point coordination function interframe space.

The time length of the point coordination function interframe space is greater than the time length of the short interframe space.

An embodiment of the present invention further provides a data transmission protection method. The method includes:
sending, by an access point, resource allocation information, where the resource allocation information includes information about a transmission channel allocated to at least two stations, so that a station that receives the resource allocation information obtains, according to the resource allocation information, at least one overlapping subchannel used by the station to send a transmission protection message, and sends the transmission protection message on each overlapping subchannel in the at least one overlapping subchannel; and
if at least two stations send transmission protection messages on the current overlapping subchannel, simultaneously sending, by the at least two stations, the transmission protection messages, where the simultaneously sent the transmission protection messages are the same.

An operating band between the access point and the station is divided into multiple subchannels, and the overlapping subchannel is a subchannel that overlaps the transmission channel of the station.

The transmission protection message is used to protect downlink data from the access point to the station, the transmission protection message includes duration, and the duration is used to indicate an exclusive time of the station for the transmission channel allocated to the station.

### Embodiment 9

FIG. 10 is a schematic diagram of an application scenario according to an embodiment of the present invention. As shown in FIG. 10, a channel is divided into multiple inherent subchannels, and a bandwidth of each subchannel is 20 MHZ. FIG. 10 shows only some subchannels. On the channel, there is downlink data transmitted from an AP to a STA, uplink data transmitted from the STA to the AP, and an instant confirmation message from the AP to the STA, and CTS frames on each subchannel are sequentially sent.

On a subchannel 1010, uplink data includes data transmitted separately by a STA 1 and a STA 2 to the AP, and downlink data includes data transmitted by the AP separately to the STA 1 and a STA 3. Because the AP needs to feed back the instant confirmation message to the STA, the STA 1, the STA 2, and the STA 3 all need to send CTS frames.

A CTS 1, a CTS 2, and a CTS 3 respectively sent by the STA 1, the STA 2, and the STA 3 need to be sequentially sent on the subchannel 1010 in ascending order of STA IDs.

Likewise, the CTS 3, a CTS 4, a CTS 5, and a CTS 6 respectively sent by the STA 3, a STA 4, a STA 5, and a STA 6 need to be sequentially sent on a subchannel 1020.

### Embodiment 10

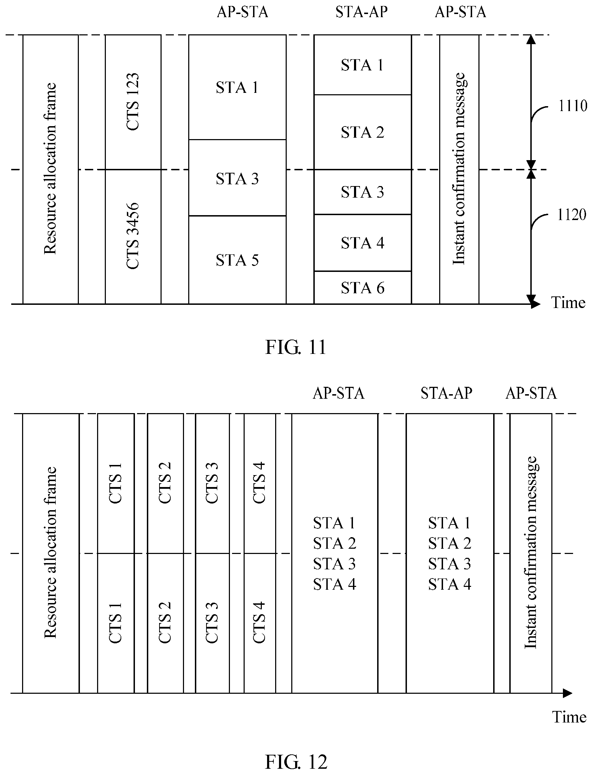

FIG. 11 is a schematic diagram of an application scenario according to an embodiment of the present invention. As shown in FIG. 11, a channel is divided into multiple subchannels, and a bandwidth of each subchannel is 20 MHZ. FIG. 11 shows only some subchannels. On the channel, there is downlink data transmitted from an AP to a STA, uplink data transmitted from the STA to the AP, and an instant confirmation message from the AP to the STA, and CTS frames on each subchannel are simultaneously sent.

On a subchannel 1110, uplink data includes data transmitted separately by a STA 1 and a STA 2 to the AP, and downlink data includes data transmitted by the AP separately to the STA 1 and a STA 3. Because the instant confirmation message needs to be fed back, the STA 1, the STA 2, and the STA 3 all need to send CTS frames, and all the STAs simultaneously send the CTS frames. A CTS 123 is obtained by superposition of the CTS frames sent by the STA 1, the STA 2, and the STA 3.

Likewise, on a subchannel 1120, a CTS 3456 is obtained by superposition of CTS frames sent by the STA 3, a STA 4, a STA 5, and a STA 6.

### Embodiment 11

A transmission protection method in the present invention is not only applicable to OFDMA, but also applicable to a MU MIMO system. In this embodiment, a transmission protection message is a CTS frame.

FIG. 12 is a schematic diagram of sending a transmission protection message by a STA according to an embodiment of the present invention. An application scenario shown in FIG. 11 is the MU MIMO system.

As shown in FIG. 12, resource allocation information is used for scheduling for MIMO transmission of multiple STAs. In the MU MIMO system, all STAs receive data on a same frequency band, and therefore, an entire bandwidth is also occupied for transmission of a data protection frame. As shown in FIG. 12, a STA 1, a STA 2, a STA 3, and a STA 4 that are scheduled send a transmission protection message on all subchannels of an entire transmission channel. Multiple STAs may be sorted according to a sending rule, or an AP may designate a sending order. In the application scenario shown in FIG. 12, the STA 1, the STA 2, the STA 3, and the STA 4 sequentially send a CTS 1, a CTS 2, a CTS 3, and a CTS 4 on each subchannel.

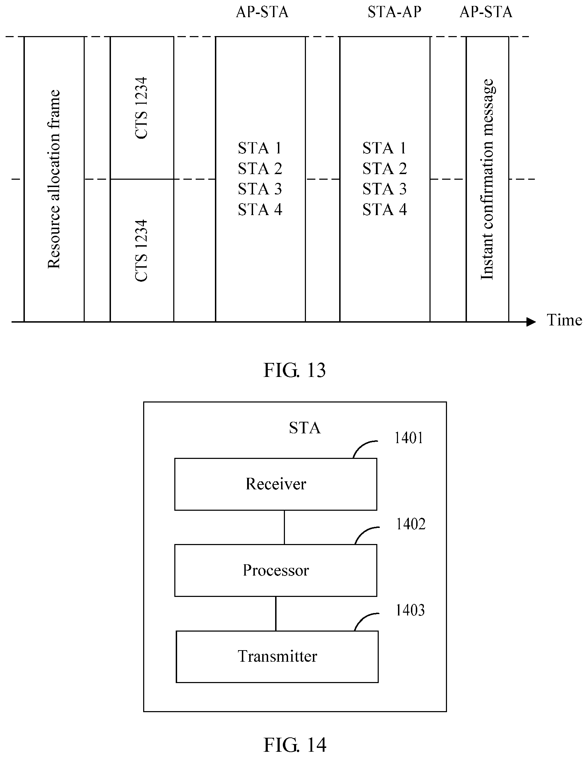

Likewise, the transmission protection method in the present invention is applied to the MU MIMO system, and multiple STAs may also simultaneously send transmission protection messages. FIG. 13 is a schematic diagram of sending a transmission protection message by a STA according to an embodiment of the present invention. As shown in FIG. 13, a STA 1, a STA 2, a STA 3, and a STA 4 simultaneously send a CTS 1234 on each subchannel.

It may be learned that the transmission protection method in this embodiment of the present invention can also implement transmission protection in the MU MIMO system.

### Embodiment 12

This embodiment of the present invention provides a STA, and the STA is configured to execute a function executed by a STA in a data transmission protection method provided in any embodiment in the foregoing embodiments in which STAs sequentially send transmission protection messages. Referring to FIG. 14, the STA includes a receiver 1401, a processor 1402, and a transmitter 1403 (there may be one or more processors, one processor is used as an example in this embodiment, and another embodiment that involves a processor may be understood with reference to descriptions herein).

The receiver 1401 is configured to receive resource allocation information sent by an access point, where the resource allocation information includes a transmission channel allocated by the access point to the station, and the transmission channel is a frequency band allocated by the access point to the station.

The processor 1402 is configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel of the station.

The processor 1402 is further configured to determine whether each overlapping subchannel in the at least one overlapping subchannel used by the station to send the transmission protection message is used only by the station to send the transmission protection message.

The transmitter 1403 is configured to: if a current overlapping subchannel is used only by the station to send the transmission protection message, send the transmission protection message on the current overlapping subchannel.

The transmitter 1403 is further configured to: if a current overlapping subchannel is further used by another station to send the transmission protection message, send the transmission protection message on the current overlapping subchannel according to a preset rule.

If the current overlapping subchannel is further used by another station to send the transmission protection message, multiple stations that send transmission protection messages on the current overlapping subchannel sequentially send the transmission protection messages on the current overlapping subchannel, where the multiple stations include the station.

The transmission protection message is used to protect downlink data transmission from the access point to the station, the transmission protection message includes duration, and the duration is used to indicate an exclusive time of the station for the transmission channel allocated to the station.

Optionally, the transmitter 1403 is further configured to send the transmission protection message on the current overlapping subchannel when a preset time length elapses after the resource allocation information is received.

The transmitter 1403 is further configured to send the transmission protection message on the current overlapping subchannel according to the preset rule when a preset time length elapses after the resource allocation information is received.

Optionally, the transmitter 1403 is further configured to send the transmission protection message on the current overlapping subchannel when a preset time length elapses after sending of uplink data to the access point is completed.

The transmitter 1403 is further configured to send the transmission protection message on the current overlapping subchannel according to the preset rule when a preset time length elapses after sending of uplink data to the access point is completed.

Each embodiment of the present invention provides a station, each embodiment of the present invention provides a station, so that data transmission from the access point to the station can be protected, and another third-party station can set duration of the another third-party station according to duration in a transmission protection message. Therefore, a time and a frequency band for data transmission that needs to be performed from the AP to the STA are shunned, further, data transmission sent from the AP to the STA is protected, and data transmission reliability is improved.

### Embodiment 13

This embodiment of the present invention further provides a STA, and the STA is configured to execute a function executed by a STA in a data transmission protection method provided in any embodiment in the foregoing embodiments in which STAs simultaneously send transmission protection messages.

The STA includes:
a receiver, configured to receive resource allocation information sent by an access point, where the resource allocation information includes a transmission channel allocated by the access point to the station, and the transmission channel is a frequency band allocated by the access point to the station;
a processor, configured to obtain, according to a status of mutual overlap between the allocated transmission channel and multiple subchannels, at least one overlapping subchannel used by the station to send a transmission protection message, where an operating band between the access point and the station is divided into multiple subchannels, and the overlapping subchannel is a subchannel that overlaps the transmission channel of the station; and
a transmitter, configured to send the transmission protection message on the at least one overlapping subchannel.

If a current overlapping subchannel on which the station sends the transmission protection message is further used by another station to send the transmission protection message, multiple stations that send transmission protection messages on the current overlapping subchannel simultaneously send the transmission protection messages on the current overlapping subchannel, where the multiple stations include the station.

The simultaneously sent transmission protection messages are the same.

The transmission protection message is used to protect downlink data transmission from the access point to the station, the transmission protection message includes duration, and the duration is used to indicate an exclusive time of the station for the transmission channel allocated to the station.

Each embodiment of the present invention provides a station, so that data transmission from the access point to the station can be protected, and another third-party station can set duration of the another third-party station according to duration in a transmission protection message. Therefore, a time and a frequency band for data transmission that needs to be performed from the AP to the STA are shunned, further, data transmission sent from the AP to the STA is protected, and data transmission reliability is improved.

### Embodiment 14

This embodiment of the present invention provides an AP, and the AP is configured to execute a function executed by an AP in a data transmission protection method provided in any embodiment in the foregoing corresponding embodiments. Referring to FIG. 15, the AP includes a receiver 1501, a processor 1502, and a transmitter 1503.

The processor 1502 is configured to generate resource allocation information.

The transmitter 1503 is configured to send the resource allocation information, where the resource allocation information includes information about a transmission channel allocated to at least two stations, so that a station that receives the resource allocation information obtains, according to the resource allocation information, at least one overlapping subchannel used by the station to send a transmission protection message, and sends the transmission protection message on each overlapping subchannel in the at least one overlapping subchannel.

The receiver 1501 is configured to: if at least two stations send transmission protection messages on the current overlapping subchannel, receive the transmission protection messages sequentially sent by the at least two stations.

An operating band between the access point and the station is divided into multiple subchannels, and the overlapping subchannel is a subchannel that overlaps the transmission channel of the station.

The transmission protection message is used to protect downlink data from the access point to the station that sends the transmission protection message, the transmission protection message includes duration, and the duration is used to indicate an exclusive time, of the station that sends the transmission protection message, for the transmission channel allocated to the station.

Optionally, the transmitter 1503 is further configured to: after sending of the resource allocation information is completed, if within a first time length, the access point receives the transmission protection message sent by the station or detects that the operating band is busy, send the downlink data to the station when a second time length elapses after sending of the resource allocation information ends.

The transmitter 1503 is further configured to: after sending of the resource allocation information is completed, if within a first time length, it is detected that the operating band is idle, send the downlink data to the station when a third time length elapses after sending of the resource allocation information ends.

Optionally, the receiver 1501 is further configured to: after sending of the resource allocation information is completed, receive uplink data sent by the station.

The transmitter 1503 is further configured to: after receiving of the uplink data is completed, if within a first time length, the transmission protection message sent by the station is received or it is detected that the operating band is busy, transmit the downlink data when a second time length elapses after receiving of the uplink data ends.

The transmitter 1503 is further configured to: after receiving of the uplink data sent by the station is completed, if within a first time length, it is detected that the operating band is idle, transmit the downlink data when a third time length elapses after the foregoing data receiving ends.

Each embodiment of the present invention provides an access point, so that data transmission from the access point to the station can be protected, and another third-party station can set duration of the another third-party station according to duration in a transmission protection message. Therefore, a time and a frequency band for data transmission that needs to be performed from the AP to the STA are shunned, further, data transmission sent from the AP to the STA is protected, and data transmission reliability is improved.

### Embodiment 15

This embodiment of the present invention provides an AP, and the AP is configured to execute a function executed by an AP in a data transmission protection method provided in any embodiment in the foregoing corresponding embodiments. The AP includes:
a processor, configured to generate resource allocation information;
a transmitter, configured to send the resource allocation information, where the resource allocation information includes information about a transmission channel allocated to at least two stations, so that a station that receives the resource allocation information obtains, according to the resource allocation information, at least one overlapping subchannel used by the station to send a transmission protection message, and sends the transmission protection message on each overlapping subchannel in the at least one overlapping subchannel; and
a receiver, configured to: if at least two stations send transmission protection messages on the current overlapping subchannel, receive the transmission protection messages simultaneously sent by the at least two stations, where the simultaneously sent transmission protection messages are the same.

An operating band between the access point and the station is divided into multiple subchannels, and the overlapping subchannel is a subchannel that overlaps the transmission channel of the station.

The transmission protection message is used to protect downlink data from the access point to the station, the transmission protection message includes duration, and the duration is used to indicate an exclusive time of the station for the transmission channel allocated to the station.

Optionally, the transmitter is further configured to: after sending of the resource allocation information is completed, if within a first time length, the access point receives the transmission protection message sent by the station or detects that the operating band is busy, send the downlink data to the station when a second time length elapses after sending of the resource allocation information ends.

The transmitter is further configured to: after sending of the resource allocation information is completed, if within a first time length, it is detected that the operating band is idle, send the downlink data to the station when a third time length elapses after sending of the resource allocation information ends.

Optionally, the receiver is further configured to: after sending of the resource allocation information is completed, receive uplink data sent by the station.

The transmitter is further configured to: after receiving of the uplink data is completed, if within a first time length, the transmission protection message sent by the station is received or it is detected that the operating band is busy, transmit the downlink data when a second time length elapses after receiving of the uplink data ends.

The transmitter is further configured to: after receiving of the uplink data sent by the station is completed, if within a first time length, it is detected that the operating band is idle, transmit the downlink data when a third time length elapses after the foregoing data receiving ends.

In the foregoing embodiments, there are focuses in descriptions in each embodiment. For a part that is not described in detail in an embodiment, reference may be made to related descriptions in other embodiments.

Each embodiment of the present invention provides an access point, so that data transmission from the access point to the station can be protected, and another third-party station can set duration of the another third-party station according to duration in a transmission protection message. Therefore, a time and a frequency band for data transmission that needs to be performed from the AP to the STA are shunned, further, data transmission sent from the AP to the STA is protected, and data transmission reliability is improved.

The embodiments of the present invention provide a data transmission protection method and apparatus, a station, and an access point. A station receives resource allocation information sent by an access point, where the resource allocation information includes a transmission channel allocated by the access point to the station; the station obtains, according to a status of mutual overlap between the allocated transmission channel and multiple subchannels, at least one overlapping subchannel used by the station to send a transmission protection message, and sends the transmission protection message on the at least one overlapping subchannel, where the transmission protection message includes duration, and the duration indicates an exclusive time of the station for the transmission channel allocated to the station, so that data transmission from the access point to the station is protected, and another third-party station sets duration of the another third-party station according to the duration in the transmission protection message. Therefore, a time and a frequency band for data transmission that needs to be performed from the AP to the STA are shunned, further, data transmission sent from the AP to the STA is protected, and data transmission reliability is improved.

In all the embodiments provided in the present invention, there are focuses in descriptions in each embodiment. For a part that is not described in detail in an embodiment, reference may be made to related descriptions in other embodiments.

In all the embodiments of the present invention, a transmission channel indicated by a channel resource that is included in resource allocation information and is allocated by an access point to a station may be a data transmission channel subsequently used by the station for data transmission, for example, a data transmission channel allocated in a minimum unit of 2 MHZ. In this case, the station needs to reversely deduce, according to the data transmission channel, one or more overlapping subchannels used to send a transmission protection message (such as a CTS frame). The overlapping subchannel is, for example, one or more 20-MHZ channels on which the data transmission channel is located. Alternatively, a transmission channel indicated by a channel resource that is included in resource allocation information and is allocated by an access point to a station may be a subchannel that is designated by the AP and that is specially used to send a transmission protection message, that is, the transmission channel is indicated in a minimum unit of a subchannel bandwidth. For example, if the AP instructs the station to send the transmission protection message on a 40-MHZ channel, the station send the transmission protection message simultaneously on two 20-MHZ subchannels included in the 40-MHZ channel.

Because an apparatus embodiment is basically corresponding to a method embodiment, for related parts, reference may be made to the method embodiment. The foregoing described apparatus embodiment is merely exemplary. The units described as separate parts may be or may not be physically separate, and parts displayed as units may be or may not be physical units, that is, may be located in one position, or may be distributed on a plurality of network units. Some or all modules may be selected according to practical needs to achieve the objectives of the solutions of the embodiments. Persons of ordinary skill in the art may understand and implement the embodiments of the present invention without creative efforts.

The present invention can be described in the general context of executable computer instructions executed by a computer, for example, a program module. Generally, the program module includes a routine, a program, an object, a component, a data structure, and the like for executing a particular task or implementing a particular abstract data type. The present invention may also be practiced in a distributed computing environment in which tasks are performed by remote processing devices that are connected by using a communications network. In the distributed computing environment, program modules may be located in both local and remote computer storage media including storage devices.

Persons of ordinary skill in the art may understand that all or a part of the steps of the foregoing method embodiments may be implemented by a program instructing relevant hardware. The program may be stored in a computer readable storage medium. The storage medium herein includes: a ROM, a RAM, a magnetic disk, an optical disc, or the like.

Persons skilled in the art can understand that, although the method described in all embodiments of the present invention includes multiple operations or steps appearing according to a specific order, the method may include more or fewer operations or steps, where these operations or steps may be executed according to an order or executed in parallel, and the order is not necessarily a strict order.

It should be further noted that in this specification, relational terms such as first and second are only used to distinguish one entity or operation from another, and do not necessarily require or imply that any actual relationship or order exists between these entities or operations. Moreover, the terms "include", "comprise", or their any other variant is intended to cover a non-exclusive inclusion, so that a process, a method, an article, or a device that includes a list of elements not only includes those elements, but also includes other elements which are not expressly listed or also includes elements inherent to such process, method, article, or device. An element preceded by "includes a ..." does not, without more constraints, preclude the existence of additional identical elements in the process, method, article, or device that includes the element.

The foregoing descriptions are merely exemplary embodiments of the present invention, but are not intended to limit the protection scope of the present invention. Specific examples are used in this specification to describe the principle and implementation manners of the present invention. The descriptions of the foregoing embodiments are merely intended to help understand the method and core idea of the present invention. In addition, persons skilled in the art can make modifications with respect to the specific implementation manners and the application scope according to the idea of the present invention. Therefore, the content of this specification shall not be construed as a limitation to the present invention. Any modification, equivalent replacement, or improvement made without departing from the spirit and principle of the present invention shall fall within the protection scope of the present invention.

## Claims

1. A data transmission protection method, wherein the method comprises:
receiving, by a station, a trigger trigger frame sent by an access point; and
sending, by the station, a scrambled transmission protection message according to the trigger frame, wherein the transmission protection message is used to protect data transmission between the station and the access point; wherein
a scrambling code generator initial state value the same as that of the trigger frame is used when the transmission protection message is being scrambled, and the scrambling code generator initial state value is used to generate a scrambling code sequence, to scramble the transmission protection message.

2. The method according to claim 1, wherein the trigger frame comprises resource allocation information, the resource allocation information comprises a channel resource allocated by the access point to at least two stations that comprise the station, the transmission protection message comprises duration, and the duration is used to indicate an exclusive time of the station for a channel resource allocated to the station.

3. The method according to claim 2, wherein the at least two stations simultaneously send transmission protection messages after receiving the resource allocation information, and the transmission protection messages are used to protect data transmission between the access point and the stations that send the transmission protection messages.

4. The method according to claim 3, wherein the simultaneously sent transmission protection messages are the same.

5. The method according to claim 4, wherein that the simultaneously sent transmission protection messages are the same comprises:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

6. The method according to claim 5, wherein that a same scrambling code sequence is used to scramble the simultaneously sent transmission protection messages is specifically: a scrambling code generator initial state value the same as that of the trigger frame is used when the simultaneously sent transmission protection messages are being scrambled, wherein the scrambling code generator initial state value is used to generate a scrambling code sequence, to scramble the transmission protection messages.

7. The method according to any one of claims 2 to 6, wherein the sending, by the station, the transmission protection message according to the trigger frame comprises:
obtaining, by the station according to a status of mutual overlap between a transmission channel and multiple subchannels, at least one overlapping subchannel used by the station to send the transmission protection message, wherein the transmission channel is indicated by the channel resource that is allocated to the station and that is in the resource allocation information comprised in the trigger frame, an operating band between the access point and the station is divided into multiple subchannels, and the overlapping subchannel is a subchannel that is in the multiple subchannels and that overlaps the transmission channel allocated to the station; and
sending the transmission protection message on the at least one overlapping subchannel.

8. The method according to any one of claims 1 to 7, wherein the STA sends the transmission protection message when a preset time length elapses after the STA receives the trigger frame.

9. The method according to any one of claims 1 to 8, wherein the transmission protection message is a clear to send CTS frame or an ACK frame.

10. A station, wherein the station comprises:
a receiver, configured to receive a trigger trigger frame sent by an access point;
a transmitter, configured to send a scrambled transmission protection message according to the trigger frame, wherein the transmission protection message is used to protect data transmission between the station and the access point; and
a processor, configured to generate the scrambled transmission protection message, wherein a scrambling code generator initial state value the same as that of the trigger frame is used when the transmission protection message is being scrambled, and the scrambling code generator initial state value is used to generate a scrambling code sequence, to scramble the transmission protection message.

11. The method according to claim 10, wherein the trigger frame comprises resource allocation information, the resource allocation information comprises a channel resource allocated by the access point to at least two stations that comprise the station, the transmission protection message comprises duration, and the duration is used to indicate an exclusive time of the station for a channel resource allocated to the station.

12. The method according to claim 11, wherein the at least two stations simultaneously send transmission protection messages after receiving the resource allocation information, and the transmission protection messages are used to protect data transmission between the access point and the stations that send the transmission protection messages.

13. The method according to claim 12, wherein the simultaneously sent transmission protection messages are the same.

14. The method according to claim 13, wherein that the simultaneously sent transmission protection messages are the same comprises:
a same scrambling code sequence is used to scramble the simultaneously sent transmission protection messages;
a same modulation and coding scheme is used for the simultaneously sent transmission protection messages; and
the simultaneously sent transmission protection messages have same MAC layer content.

15. The method according to claim 14, wherein that a same scrambling code sequence is used to scramble the simultaneously sent transmission protection messages is specifically: a scrambling code generator initial state value the same as that of the trigger frame is used when the simultaneously sent transmission protection messages are being scrambled, wherein the scrambling code generator initial state value is used to generate a scrambling code sequence, to scramble the transmission protection messages.

16. The method according to any one of claims 11 to 15, wherein the processor is further configured to:
obtain, according to a status of mutual overlap between a transmission channel and multiple subchannels, at least one overlapping subchannel used by the transmitter to send the transmission protection message, wherein the transmission channel is indicated by the channel resource that is allocated to the station and that is in the resource allocation information comprised in the trigger frame, an operating band between the access point and the station is divided into multiple subchannels, and the overlapping subchannel is a subchannel that is in the multiple subchannels and that overlaps the transmission channel allocated to the station; and
the transmitter is specifically configured to send the transmission protection message on the at least one overlapping subchannel.

17. The method according to any one of claims 10 to 16, wherein the transmitter is specifically configured to send the transmission protection message when a preset time length elapses after the trigger frame is received.

18. The method according to any one of claims 10 to 17, wherein the transmission protection message is a clear to send CTS frame or an ACK frame.
